# FASCICULE DE BREVET EUROPEEN

(11) **EP 1 004 101 B1**
(45) Date de publication et mention de la délivrance du brevet: **27.02.2002**
(21) Numéro de dépôt: 99920898.6
(22) Date de dépôt: 20.05.1999
(51) Int. Cl.: G07F 7/10, G07F 7/08

(54) **TERMINAL ET SYSTEME POUR LA MISE EN OEUVRE DE TRANSACTIONS ELECTRONIQUES SECURISEES**
TERMINAL UND SYSTEM ZUR DURCHFÜHRUNG VON GESICHERTEN ELEKTRONISCHEN TRANSAKTIONEN
TERMINAL AND SYSTEM FOR IMPLEMENTING SECURE ELECTRONIC TRANSACTIONS

(30) Priorité: 22.05.1998 FR 9806450
(43) Date de publication de la demande: 31.05.2000
(73) Titulaire: ACTIVCARD, 92156 Suresnes Cédex (FR)
(72) Inventeur: AUDEBERT, Yves, Louis, Gabriel, Los Gatos, CA 95032 (US)
(74) Mandataire: Colas, Jean-Pierre
(86) Numéro de dépôt international: FR9901202
(87) Numéro de publication internationale: WO9962037

(56) Documents cités:
- WO-A-95/04328
- WO-A-96/29667
- WO-A-97/50207
- US-A- 4 442 484
- US-A- 5 446 864

## Description

La présente invention concerne un terminal et un système pour la mise en oeuvre de transactions électroniques sécurisées.

Les réseaux publics de transmission de données numériques, tels que le réseau Internet, connaissent un développement considérable. Cependant, l'un des freins qui limitent actuellement la mise en oeuvre de transactions électroniques sécurisées sur ce type de réseau réside dans l'insuffisance des mécanismes de sécurité associés à de telles transactions, insuffisance qui se traduit par un manque de confiance des utilisateurs et opérateurs de réseaux.

Au sens de la présente demande :
- une transaction électronique désigne un échange d'informations, via un réseau public de transmission de données numériques ou de télécommunications, soit entre deux ou plusieurs utilisateurs, soit entre un utilisateur et un fournisseur de services,
- une fonction est un traitement effectué dans l'objectif de rendre un service à un utilisateur,
- une application désigne un ensemble cohérent de services et de fonctions,
- l'expression logiciel d'application désigne le ou les logiciels nécessaires pour mettre en oeuvre les fonctions relatives à une application donnée,
- une transaction sécurisée est une transaction pour laquelle certaines mesures de sécurité sont prises, à savoir l'authentification des entités participant à la transaction, l'intégrité, la confidentialité, l'authenticité, et éventuellement la non répudiation des échanges et opérations effectuées dans le cadre de la transaction.

De nombreuses applications nécessitent que les transactions électroniques mises en oeuvre soient sécurisées. Il s'agit par exemple du contrôle d'accès à des ressources informatiques ou similaires, de la banque à domicile (consultation, mouvements de comptes bancaires, etc... par l'intermédiaire du réseau téléphonique ou d'Internet), du commerce électronique (achat de biens ou services par l'intermédiaire d'un réseau public), du courrier électronique, du porte-monnaie électronique, etc...

Ces applications, ainsi que d'autres, nécessitant des transactions sécurisées sont bien connues des spécialistes de la technique et ne sont pas décrites ici en détails.

Suivant leur nature, la sécurisation de ces applications nécessite la mise en oeuvre d'un ou plusieurs services de sécurité tels que :
- l'authentification, qui permet de garantir l'identité d'une entité (une personne ou un système) ;
- le contrôle d'accès, qui confère une protection contre l'utilisation ou la manipulation non autorisée de ressources ;
- la confidentialité, qui interdit la divulgation de données à des entités non autorisées ;
- l'intégrité de données, qui assure que des données n'ont pas été modifiées, supprimées ou substituées sans autorisation ;
- la non répudiation, qui assure qu'un participant à un échange de données ne pourra pas ultérieurement nier l'existence de cet échange.

La combinaison de deux techniques existantes permet d'envisager la mise en oeuvre de ces services de sécurité, offrant ainsi un niveau de sécurité suffisant pour effectuer des transactions électroniques.

Il s'agit de:
- la cryptographie à clé publique et clé privée, car elle permet de garantir la non répudiation et facilite la gestion des clés ;
- la carte à circuit intégré (ou "smart card") car elle est peu coûteuse, facile à utiliser et sûre grâce à des microprocesseurs spécifiques dotés de protections matérielles et logicielles permettant d'interdire l'accès en lecture et en écriture à leurs mémoires.

Les cartes à circuit intégré offrent les services suivants :
* l'authentification du porteur ou utilisateur de la carte : cette opération permet d'authentifier le porteur à l'aide d'un code confidentiel et à la carte d'accepter par la suite la mise en oeuvre d'opérations telles que l'exécution d'algorithmes, la lecture de clés secrètes, la lecture et/ou l'écriture de données dans la carte, qui peuvent en outre être soumises à d'autres conditions de sécurité ;
* la protection des données et fonctions stockées sur la carte à circuit intégré. L'accès à la carte peut être soumis à une authentification préalable de l'entité électronique demandant à y accéder. Cette authentification externe se fait généralement en mode challenge/réponse. Dans ce cas, l'entité dispose d'un paramètre secret, ci-après appelé également secret, qui lui permet de calculer, en fonction d'un challenge émis par la carte, une réponse qui prouvera à la carte qu'elle est en possession du secret ;
* exécution d'algorithmes cryptographiques utilisant un paramètre secret mémorisé dans la carte (chiffrement, authentification de message, signature) ;
* authentification interne. Ce service permet à une application d'authentifier la carte. Ce service est l'inverse d'une authentification externe. La carte génère une réponse en fonction d'un challenge reçu et d'un secret stocké dans la carte.

Les services offerts par la carte à circuit intégré sont mis en oeuvre sur réception de commandes dites élémentaires, l'exécution de la commande élémentaire provoquant l'envoi de réponses élémentaires. Ces commandes élémentaires concernent, par exemple, des calculs cryptographiques, la lecture ou l'écriture de données secrètes ou non, des interventions de l'utilisateur (saisie de son code confidentiel personnel PIN, validation d'une transaction après signature), les retours d'information vers l'utilisateur (affichage des messages à signer, par exemple).

Certaines cartes offrent la possibilité de vérifier l'intégrité, l'origine, voire la confidentialité des commandes envoyées à la carte. Ces services reposent sur des techniques d'authentification et de chiffrement des commandes.

L'utilisation qui est faite actuellement des cartes à circuit intégré (ou cartes à micro-circuit) offre un degré très élevé de sécurité car les transactions sont essentiellement mises en oeuvre sur des réseaux privés et des terminaux (distributeurs automatiques de billets, terminaux points de vente par exemple) qui sont sous le contrôle d'une entité assurant la sécurité de l'ensemble du système.

Dans de telles applications, les utilisateurs ou d'éventuels fraudeurs n'ont pas accès au logiciel d'application, ni aux mécanismes de sécurité matériels et logiciels dont sont dotés les terminaux.

Par contre, la mise en oeuvre de transactions sécurisées avec des cartes à circuit intégré sur un réseau public suppose que les utilisateurs aient à leur disposition un module terminal lecteur de carte, étant donné que ces cartes à micro-circuit ne sont pas dotées d'une source d'énergie électrique propre et que leur mise en oeuvre requiert un lecteur susceptible de les alimenter et d'établir une communication avec l'utilisateur et/ou des moyens électroniques extérieurs.

A l'heure actuelle, pour réaliser une transaction sur un réseau public, l'utilisateur dispose d'un terminal, qui peut être un produit dédié, un ordinateur personnel, ou un ordinateur personnel couplé à une carte à circuit intégré par un lecteur de carte.

Dans tous les cas, le système de transactions à la disposition de l'utilisateur est en général constitué de :
- un fournisseur de services applicatifs pouvant être, par exemple, un navigateur Internet, un logiciel de messagerie, un logiciel de banque à domicile ("Home banking"),
- un fournisseur de services de sécurité de haut niveau permettant l'exécution des mécanismes cryptographiques de bas niveau requis par l'application.

Le fournisseur de services applicatifs émet des requêtes de services de sécurité de haut niveau pour assurer la sécurité des transactions mises en oeuvre.

Dans le cas où l'application est implantée sur l'ordinateur personnel de l'utilisateur, les services cryptographiques auxquels il est fait référence sont, par exemple, ceux définis par la Société RSA Laboratories dans son standard "PKCS 11 : Cryptographic Token Interface Standard", ou encore les services cryptographiques offerts par le système d'exploitation Windows NT de Microsoft, en particulier ceux proposés par l'Interface des programmes d'application (API) "Crypto API".

Lorsque l'utilisateur ne dispose pas de lecteur de carte à circuit intégré, les services cryptographiques sont réalisés de manière logicielle uniquement..

Lorsque l'utilisateur veut améliorer la sécurité, il utilise un lecteur de carte à circuit intégré de type transparent connecté a son ordinateur. Un lecteur de carte de type transparent est en fait un boîtier d'interface entre l'ordinateur et la carte à circuit intégré qui permet de transmettre des commandes élémentaires de l'ordinateur, provenant du fournisseur de services cryptographiques, vers la carte, et les réponses élémentaires de la carte vers l'ordinateur. Un utilisateur peut, à l'aide de ce terminal, (constitué de son module terminal - ordinateur + lecteur - couplé à sa carte) effectuer des transactions électroniques (commerce électronique par exemple).

Bien entendu, l'accès des utilisateurs à un tel terminal engendre des risques potentiels du point de vue de la sécurité.

Les risques encourus seront d'autant plus grands que les applications seront décentralisées. Et vice versa, les applications pourront être d'autant plus décentralisées, que les risques côté terminaux seront maîtrisés. Par exemple, on peut envisager des applications de type porte-monnaie, dans lesquelles les transactions (débit de la carte acheteur/crédit de la carte commerçant) se feront de carte à carte, sans nécessiter une consolidation des transactions au niveau d'un serveur central.

Il résulte de ce qui précède, qu'un terminal peut potentiellement contenir un ensemble d'informations, voire des logiciels, sur la confidentialité et l'intégrité desquels repose la sécurité de l'application. Comme exemple, on peut citer des clés secrètes utilisées pour l'authentification du module terminal vis-à-vis de la carte, ou pour le chiffrement de données entre un serveur et le module terminal lecteur de carte. Or, un fraudeur peut profiter du fait d'avoir à sa disposition un terminal pour analyser son fonctionnement et accéder aux informations et logiciels confidentiels.

Il faut également noter que les applications auxquelles il est fait référence ici, telles que le commerce ou le courrier électronique, sont la plupart du temps mises en oeuvre à travers le réseau Internet. Il est bien connu des experts qu'un ordinateur personnel ou PC connecté au réseau Internet est très vulnérable aux logiciels de type virus, qui peuvent être installés et exécutés sur le PC de l'utilisateur sans même qu'il le sache et sans qu'il ait laissé un accès physique à son ordinateur à qui que ce soit. Le côté totalement invisible de ce type de menace représente le réel danger qui limite à l'heure actuelle le déploiement des applications transactionnelles utilisant Internet. Les mêmes commentaires peuvent s'appliquer aux applications de commerce électroniques envisagées à partir des réseaux câblés de télévision en utilisant des décodeurs ou "set-top box" raccordés au poste de télévision et comportant un ou deux lecteurs de cartes à puce.

Les risques au niveau du système sont alors les suivants :
- Attaque sur l'intégrité du fournisseur de services cryptographiques et du fournisseur de services applicatifs visant à modifier le comportement du module terminal : à titre d'exemple, le module terminal est modifié de manière à capturer les informations liées à la carte, stocker les informations obtenues pour ensuite les communiquer à un faux serveur. Cette attaque peut être réalisée à l'insu de l'utilisateur légitime (substitution du module terminal de l'utilisateur ou prêt d'un module terminal modifié). Cette attaque peut ensuite se généraliser sous la forme de la diffusion de modules terminaux contrefaits ;
- Attaque sur la confidentialité du fournisseur de services cryptographiques, visant à se procurer les clés cryptographiques qu'il manipule, lesquelles clés sont par exemple stockées sur le disque dur d'un ordinateur.
- Attaque vis-à-vis d'autres cartes, basée sur une capacité à pouvoir s'authentifier vis-à-vis de ces cartes, grâce aux secrets découverts par une attaque sur la confidentialité du foumisseur de services.
- Attaque sur l'intégrité et la confidentialité des communications entre les différentes entités (fournisseurs de services applicatifs, foumisseurs de services cryptographiques, lecteur de carte à circuit intégré, carte à circuit intégré, serveur) permettant de rompre la chaîne de confiance établie entre ces éléments . Par exemple:
   1 - déchiffrement des communications entre serveur et terminaux ;
   2 - insertion d'un logiciel tiers entre le fournisseur de services applicatifs et le fournisseur de services cryptographiques visant à rompre la chaîne de confiance entre ces deux logiciels ou bien substitution du logiciel applicatif par un logiciel tiers visant à faire exécuter au fournisseur de services de sécurité des requêtes de sécurité dans un but différent de celui de l'application connue de l'utilisateur.
- Attaque sur les serveurs (dans le cas d'une application en mode connecté) : connexion d'un terminal contrefait à un serveur, émulation d'un couple module terminal-carte à circuit intégré pour obtenir des avantages.

Ainsi, une attaque sur la chaîne de confiance entre le fournisseur de services cryptographiques et le fournisseur de services applicatifs, dans le cadre d'une application requérant la signature d'une transaction électronique à l'aide d'une carte à circuit intégré, est illustrée ci-après. Le déroulement de la transaction est le suivant :
- Etape 1 : vérification du code confidentiel personnel (PIN) de l'utilisateur, que celui-ci introduit par un clavier associé à son module terminal, le code introduit étant transmis à la carte pour vérification par cette dernière.
- Etape 2 : authentification du module terminal. Ce dernier envoie une commande "demande challenge". (Un challenge est un nombre aléatoire ou pseudo-aléatoire). La carte à circuit intégré génère le challenge et le transmet au module terminal. Le module terminal envoie à la carte une commande "authentification externe" accompagnée d'une réponse constituée du challenge chiffré par une clé détenue par le module terminal. La carte à circuit intégré vérifie alors la réponse reçue.
- Etape 3 : si les étapes 1 et 2 se sont déroulées de manière satisfaisante, la carte à circuit intégré est prête à recevoir et exécuter la commande signature, c'est-à-dire une commande de chiffrement, au moyen d'une clé privée stockée dans la carte, du résultat d'une opération de hachage réalisée sur la transaction saisie par l'utilisateur. Après ce chiffrement, la carte émet, à destination du module terminal, la signature constituée du résultat de l'opération de hachage ("hash") ainsi chiffré.

Si l'intégrité du logiciel d'application (fournisseur de services applicatifs et son fournisseur de services cryptographiques) n'est pas assurée, un fraudeur n'a pas besoin de connaître les clés et codes secrets pour pirater le système de transaction : il lui suffit d'implanter dans le module terminal, par exemple dans l'ordinateur personnel auquel est raccordé un lecteur de carte à circuit intégré, un logiciel de type virus qui, à l'étape 3, détourne les données authentiques à signer et envoie à la carte des données falsifiées. Etant donné que les étapes 1 et 2 se sont déroulées de manière satisfaisante, la carte signera alors les données falsifiées sur la base du PIN que l'utilisateur a lui-même introduit et celui-ci croira que la carte va signer ses propres données.

L'exemple précédant montre la nécessité de protéger non seulement les informations confidentielles mises en oeuvre dans le cadre d'une transaction, mais aussi l'intégrité de la transaction, c'est-à-dire l'intégrité du comportement de chaque entité intervenant dans la transaction, ainsi que l'intégrité du comportement d'ensemble du logiciel en veillant à la non rupture de la chaîne de confiance établie entre les différentes entités.

Les risques d'attaque mentionnés ci-dessus sont à l'heure actuelle en partie couverts par des terminaux - lecteurs de carte à circuit intégré intégrant des modules de sécurité (SAM, analogue à une carte à circuit intégré) qui sont utilisés notamment dans le cadre des applications porte-monnaie. Le lecteur est alors personnalisé par un SAM, et attribué à un commerçant, les cartes lues étant celles des clients. Ce SAM contient des informations secrètes et est susceptible d'exécuter des algorithmes utilisant ces informations secrètes. Mais, il ne contient pas de moyens permettant notamment de piloter les communications avec l'utilisateur, avec la carte à circuit intégré et/ou avec des moyens électroniques extérieurs, et donc la sécurisation de transaction n'est pas assurée.

Il est également connu par le document WO 95/04328 un module terminal comprenant des moyens d'interface avec l'utilisateur et des moyens d'interface avec des moyens électroniques extérieurs (ci-après appelés moyens d'interface externe), comportant une interface avec une carte à micro-circuit. Le microprocesseur du module terminal comprend des moyens de stockage de données (ROM, EEPROM, RAM). Les données stockées en mémoire permanente (ROM) comprennent entre autres un système d'exploitation, des gestionnaires de composants externes pilotant les interfaces et périphériques, et un interpréteur capable d'interpréter des modules programmes écrits dans un langage spécifique. Les modules programmes sont stockés dans la mémoire semi-permanente EEPROM et peuvent être chargés en mémoire temporaire RAM pour être exécutés par le microprocesseur lors de l'activation d'une interface appropriée par l'utilisateur. Les modules programmes, correspondant aux applications du module terminal, sont téléchargés dans la mémoire EEPROM du microprocesseur ou dans une carte à micro-circuit à partir d'un serveur externe.

Le module terminal du document WO95/04328 peut fonctionner :
- en mode module terminal autonome, le microprocesseur du module terminal exécutant un module programme stocké dans une mémoire interne, sans faire appel à une carte à circuit intégré ;
- en mode terminal autonome, dans lequel un module programme stocké dans une carte est exécuté ;
- en mode terminal étendu ou connecté, dans lequel le microprocesseur du module terminal ou celui de la carte exécute un module programme et une communication est établie via le téléphone, un modem ou une liaison directe avec un fournisseur de services ou un serveur ;
- en mode lecteur de carte à mémoire transparent, dans lequel des instructions reçues par une liaison série sont transmises directement à la carte et vice et versa.

Le terminal décrit au document WO 95/04328 ne traite pas des problèmes de sécurité visés par l'invention dans la mesure où il ne décrit pas comment sécuriser une transaction en garantissant l'intégrité du comportement d'ensemble du logiciel exécutant la transaction. Il ne décrit notamment pas de moyens permettant l'exécution de requêtes de haut niveau émises par l'application, ni comment garantir l'origine, l'intégrité et la confidentialité de ces moyens.

La présente invention vise à fournir un terminal pour la mise en oeuvre de transactions électroniques sécurisées, du type comprenant un dispositif personnel de sécurité tel qu'une carte à circuit intégré ou autre dispositif remplissant les mêmes fonctions, et un module terminal doté de moyens d'interface avec le dispositif personnel de sécurité, tels qu'un lecteur de carte à circuit intégré, et offrant de par son architecture logicielle et/ou matérielle et les mécanismes de sécurité qu'il comporte, un niveau de sécurité amélioré, compatible avec le fait que le terminal peut être placé sous le contrôle des utilisateurs, (par opposition à des terminaux contrôlés par des opérateurs).

Un deuxième objectif de l'invention est d'assurer ce même niveau de sécurité tout en permettant l'intégration, en cours d'utilisation, de fonctions ou applications nouvelles, ou l'évolution des fonctions ou applications existantes sans avoir recours à une multitude de modules terminaux différents ou au changement des modules terminaux lors des évolutions.

A cet effet, l'invention a pour objet un terminal pour la mise en oeuvre, par un utilisateur, de transactions électroniques sécurisées en liaison avec au moins une application implantée sur une unité électronique, ledit terminal comprenant :
- un module terminal comportant au moins :
   - des premiers moyens d'interface avec ladite application pour en recevoir des requêtes relatives auxdites transactions,
   - des deuxièmes moyens d'interface avec ledit utilisateur,
   - des troisièmes moyens d'interface avec un dispositif personnel de sécurité,
   - des premiers moyens de traitement de données comprenant au moins des premiers moyens logiciels de pilotage desdits moyens d'interface, et
- un dispositif personnel de sécurité comportant au moins des deuxièmes moyens de traitement de données sécurisées comprenant au moins des deuxièmes moyens logiciels d'exécution de commandes élémentaires et des moyens d'exécution de calculs cryptographiques, caractérisé en ce que:
   * ledit terminal est adapté pour recevoir lesdites requêtes de ladite application implantée sur ladite unité électronique sous la forme de requêtes de haut niveau indépendantes dudit dispositif personnel de sécurité,
   * l'un au moins dudit module terminal et dudit dispositif personnel de sécurité comprend :
      - au moins une mémoire reprogrammable de stockage d'au moins un logiciel filtre, traduisant lesdites requêtes de haut niveau en en au moins l'une de :
         (i) au moins une commande élémentaire ou une séquence de commandes élémentaires exécutables par lesdits deuxièmes logiciels desdits deuxièmes moyens de traitement de données, ou
         (ii) au moins une séquence d'échange de données entre ledit module terminal et ledit utilisateur via lesdits seconds moyens d'interface, ledit échange de données étant exécuté par lesdits premiers moyens logiciels desdits premiers moyens de traitement de données,
      - des moyens de protection dudit logiciel filtre pour empêcher toute lecture et/ou modification dudit logiciel par une personne non autorisée, et
   * l'un au moins desdits premiers et deuxièmes moyens de traitement de données comprend un dispositif de traitement de données pour l'exécution dudit logiciel filtre.

L'invention définie ci-dessus permet d'atteindre les objectifs de sécurité requis par la mise en oeuvre de transactions électroniques grâce au fait qu'elle décrit un filtre ou pare-feu (" firewall ") entre le monde extérieur, c'est-à-dire les applications elles-mêmes, et les moyens de sécurité et périphériques qu'il gère, au moyen d'une interface logique permettant la définition du format des requêtes de haut niveau émises par les applications et d'un logiciel de traduction assurant le traitement de ces requêtes.

De préférence, le terminal suivant l'invention comprend une ou plusieurs des caractéristiques suivantes, éventuellement combinées :
- ledit dispositif d'exécution du logiciel filtre comprend des premiers moyens d'identification et/ou d'authentification de ladite application implantée dans ladite unité ou de l'origine desdites requêtes émises par ladite application ;
- ledit dispositif de traitement de données pour l'exécution dudit logiciel filtre comprend des moyens de vérification de l'intégrité des données reçue de ladite application ;
- ledit dispositif de traitement de données pour l'exécution dudit logiciel filtre comprend des moyens centralisés de contrôle des conditions d'utilisation des services du dispositif personnel de sécurité, en fonction de ladite application et/ou dudit utilisateur;
- ledit dispositif de traitement de données pour l'exécution dudit logiciel filtre comprend :
   - des moyens pour commander le chargement sécurisé dudit logiciel filtre dans ladite mémoire programmable, via l'un desdits premiers ou troisièmes moyens d'interface, à partir d'une entité extérieure audit module, et
   - des premiers moyens de contrôle d'accès pour n'autoriser ledit chargement dudit logiciel filtre qu'en réponse à au moins une condition prédéfinie ;
- le terminal comprend des deuxièmes moyens d'authentification desdits premiers moyens de traitement de données par lesdits deuxièmes moyens de traitement de données ;
- le terminal comprend des troisièmes moyens d'authentification desdits deuxièmes moyens de traitement de données par lesdits premiers moyens de traitement de données ;
- le terminal comprend un premier canal de communication entre lesdits premiers et deuxièmes moyens de traitement de données et des premiers moyens de sécurisation dudit premier canal de communication ;
- le terminal comprend des quatrième moyens d'authentification dudit module terminal par ledit utilisateur, indépendamment de ladite carte ;
- lesdits quatrièmes moyens d'authentification comprennent des moyens de calcul, par lesdits premiers moyens de traitement de données, et de présentation audit utilisateur, via lesdits deuxième moyens d'interface, d'un mot de passe connu dudit utilisateur et calculé sur la base d'au moins un premier paramètre secret stocké dans lesdits premiers moyens de traitement de données ;
- le terminal comprend des cinquièmes moyens d'authentification conjointe dudit module terminal et de ladite carte par ledit utilisateur;
- lesdits cinquièmes moyens d'authentification comprennent des moyens de calcul, par ledit dispositif d'exécution dudit logiciel, et de présentation audit utilisateur, via lesdits deuxièmes moyens d'interface, d'un mot de passe connu dudit utilisateur et calculé sur la base d'au moins un deuxième et un troisième paramètres secrets stockés respectivement dans lesdits premiers et deuxièmes moyens de traitement de données.

Selon une première forme de réalisation de l'invention, le module terminal est constitué par un ordinateur personnel et ladite mémoire programmable est constituée par le disque dudit ordinateur, ledit logiciel filtre est exécuté sur l'ordinateur personnel ou bien dans un deuxième mode d'exécution, ladite mémoire programmable est implantée sur un serveur sécurisé relié à l'ordinateur personnel, la partie du logiciel filtre devant être protégé étant exécutée sur ledit serveur sécurisé.

Selon une deuxième forme de réalisation de l'invention, le module terminal est un dispositif, tel qu'un lecteur dédié de carte à circuit intégré, auquel cas ledit dispositif personnel de sécurité est une carte à circuit intégré, ou un ordinateur personnel. Ce mode de réalisation se différencie du précédent par le fait que ladite mémoire programmable est intégrée dans un microprocesseur sécurisé, ledit logiciel filtre étant exécuté dans ledit microprocesseur sécurisé. Le module terminal dédié peut éventuellement être portable.

Selon les modes d'exécution de cette deuxième forme de réalisation de l'invention, la mémoire programmable pour le chargement et le stockage du logiciel filtre peut être disposée dans le dispositif personnel de sécurité ou dans le module terminal.

Dans ce dernier cas :
- le module terminal peut comporter un seul microprocesseur pour l'exécution du logiciel filtre et le pilotage des interfaces, ou bien deux microprocesseurs remplissant respectivement l'une et l'autre de ces deux fonctions.
- de préférence ledit logiciel filtre comprend au moins un paramètre secret et lesdits deuxièmes moyens de traitement de données comprennent des seconds moyens de contrôle d'accès conditionnels pour n'autoriser l'exécution desdits calculs cryptographiques, en réponse à des commandes élémentaires générées par ledit logiciel filtre, que si au moins une seconde condition prédéfinie, fonction dudit paramètre secret est remplie

Selon d'autres caractéristiques de l'invention, lorsque le module terminal comporte deux microprocesseurs pour l'exécution du logiciel filtre et le pilotage des interfaces :
- le terminal comprend un deuxième canal de communication entre lesdits premiers moyens logiciels de pilotage des moyens d'interface et ledit deuxième microprocesseur et des deuxièmes moyens de sécurisation dudit deuxième canal de communication ;
- lesdits deuxièmes moyens de sécurisation comprennent des moyens de chiffrement et déchiffrement, par lesdits premiers moyens logiciels de pilotage des moyens d'interface et ledit deuxième microprocesseur, des données transmises sur ledit deuxième canal de communication, sur la base d'au moins un cinquième paramètre secret mémorisé dans lesdits premiers et deuxièmes moyens de traitement de données ;
- lesdits deuxièmes moyens de sécurisation comprennent des premiers moyens physiques de protection dudit deuxième canal de communication contre les intrusions.

Différents modes de réalisation de l'invention seront maintenant décrits en se référant aux dessins annexés, en particulier des modes de réalisation dans lesquels le logiciel filtre est chargé et exécuté dans le terminal de manière à garantir à la fois son origine, sa confidentialité et son intégrité, ce logiciel pouvant aussi authentifier l'origine des requêtes qui lui sont envoyées, si la confiance dans les interfaces avec l'utilisateur, c'est-à-dire l'écran et le clavier, ne peut être garantie.
- la Figure 1 est un schéma illustrant l'architecture fonctionnelle d'un système pour la mise en oeuvre de transactions sécurisées au moyen d'un terminal selon l'invention ;
- la Figure 2A présente une première forme de réalisation de l'invention où le terminal est un ordinateur personnel couplé à une carte à circuit intégré par un lecteur, l'application pouvant être elle même implantée sur l'ordinateur personnel ou sur un serveur distant.
- la Figure 2B décrit l'architecture fonctionnelle d'une variante d'exécution de la première forme de réalisation de l'invention, dans laquelle l'ordinateur personnel servant de terminal est en liaison avec un serveur de sécurité sur lequel est implanté le logiciel filtre ;
- la Figure 3 présente un système de transaction mis en oeuvre grâce à un terminal selon une deuxième forme de réalisation de l'invention, qui peut être un produit dédié relié en tant que périphérique à un ordinateur personnel ou directement à un serveur ou bien construit autour d'un ordinateur personnel ;
- la Figure 4A est un schéma bloc de l'architecture matérielle des circuits électroniques d'un premier mode d'exécution du terminal de la figure 3 ;
- la Figure 4B est un schéma fonctionnel illustrant une première configuration d'architecture logicielle du terminal de la figure 4A ;
- la Figure 4C est un schéma fonctionnel similaire à celui de la figure 4B présentant une seconde configuration d'architecture logicielle du terminal de la figure 4A ;
- la Figure 5 est un schéma bloc de l'architecture matérielle des circuits électroniques d'un deuxième mode d'exécution du terminal autonome de la figure 3 ;
- la Figure 6 est un schéma bloc de l'architecture matérielle des circuits électroniques d'un troisième mode d'exécution du terminal autonome de la figure 3 ;
- la Figure 7 est un schéma illustrant l'architecture logicielle conventionnelle d'une carte à micro-circuit ;
- la Figure 8A est un schéma illustrant l'architecture logicielle d'un système de transaction comprenant le terminal de la figure 4A ;
- la Figure 8B est un schéma illustrant l'architecture logicielle d'un système de transaction comprenant le terminal de la figure 6 ;
- la Figure 9 est un diagramme illustrant la mise en oeuvre d'une application de commerce électronique au moyen d'un système selon l'invention ; et
- la Figure 10 est un organigramme illustrant le processus de téléchargement d'un programme dans une mémoire reprogrammable du module terminal de la figure 4A ou 5, ou d'une carte à micro-circuit connectée à celui-ci ;

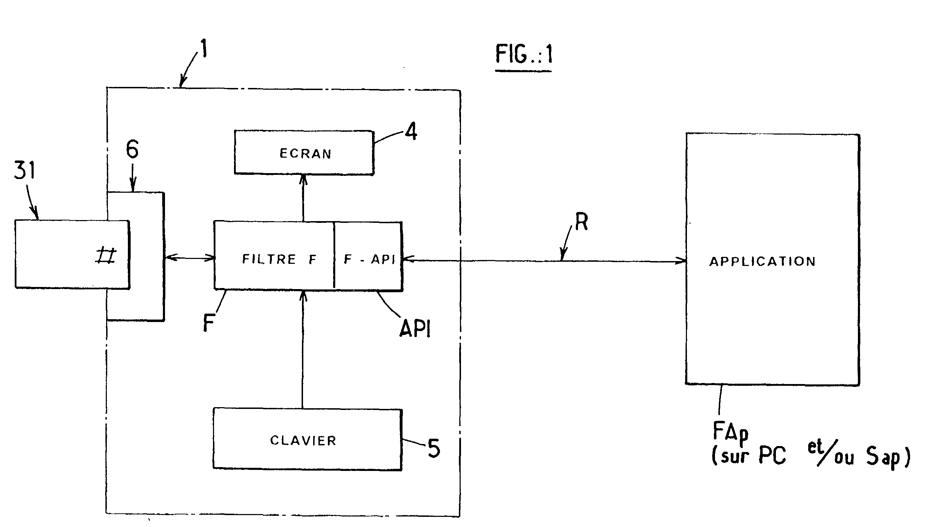

En se référant à la figure 1, un système de mise en oeuvre de transactions sécurisées comprend un module terminal 1 de lecture d'une carte à circuit intégré 31 ou équivalent. Le module terminal 1 comprend un filtre F constitué d'un module logiciel traitant des requêtes de haut niveau émises par des fournisseurs de services applicatifs FAp externes au module terminal 1 au moyen d'une interface logique F-API, et des interfaces utilisateur telles qu'un écran d'affichage 4 et un clavier 5 permettant la lecture et l'introduction de données par un utilisateur, Il comprend également un lecteur ou interface de communication 6 avec une carte à micro-circuit ou tout dispositif de sécurité équivalent personnel à l'utilisateur, du type jeton (token), " JavaRing " (produit de la société SUN), " iButton " (produit de la société Dallas Semiconductor Corporation), jeton logiciel (soft token), ainsi que des interfaces de communication avec au moins un foumisseur de services applicatifs FAp qui peut, par exemple, être implanté sur un ordinateur personnel PC et/ou sur un serveur Sap, l'échange de données s'effectuant alors via un réseau R de transmissions de données ou de télécommunications.

Le module terminal 1 peut être un terminal dédié ou être intégré dans un ordinateur personnel de type PC, ou bien dans un ordinateur-terminal NC dédié aux applications en réseau (Network Computer) ou encore dans un décodeur de réseau de télévision câblé (Set Top Box).

Le module terminal 1 peut éventuellement être utilisé en mode autonome, par exemple pour lire des informations, telles que le contenu d'un porte-monnaie électronique, contenues dans une mémoire de la carte 31.

Pour la mise en oeuvre de transactions sécurisées, le module terminal 1 peut être utilisé en mode connecté avec un serveur Sap ou en mode non connecté, l'application FAp étant alors exécutée localement, par exemple sur l'ordinateur personnel PC : Tel est le cas, par exemple, lorsqu'un utilisateur doit signer un courrier électronique ou des transactions qui seront envoyées à un destinataire. Une telle opération n'implique pas de connexion avec un serveur applicatif au moment où la carte 31 est utilisée.

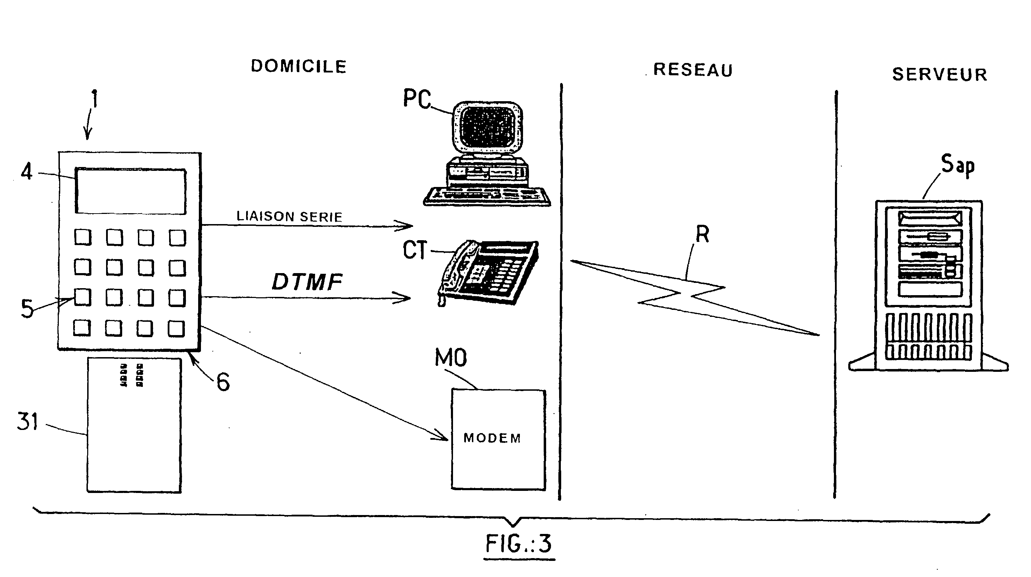

En mode connecté, comme représenté à la figure 3 dans le cas d'un module terminal 1 dédié, celui-ci peut être connecté au serveur Sap sur lequel est implanté l'application FAp par l'intermédiaire de l'ordinateur PC et d'un réseau R tel qu'Internet, ou par l'intermédiaire du réseau téléphonique R via un modem MO ou une liaison DTMF avec un combiné téléphonique CT. Certaines transactions, telles que le rechargement d'un porte-monnaie électronique dans la carte 31, peuvent nécessiter un échange bidirectionnel de données avec le serveur Sap et sont, par conséquent, plus ergonomiques en mode connecté.

La mise en oeuvre d'une transaction sécurisée avec un module terminal 1 et une carte 31 implique que des requêtes logicielles de haut niveau (par exemple des requêtes de signature, d'authentification , etc... qui doivent être traitées de manière à satisfaire les objectifs de sécurité requis du programme applicatif) soient transmises du programme applicatif implanté par exemple dans le serveur Sap (mode connecté) ou dans l'ordinateur personnel PC ou NC à la disposition de l'utilisateur (mode non connecté, par exemple signature de courrier électronique), au filtre F assurant le pilotage des moyens de sécurité. Ce filtre F effectue le traitement de ces requêtes au moyen d'un logiciel de traduction, s'assurant ainsi que l'application ou tout autre logiciel de type virus ne peuvent avoir un accès direct aux fonctions cryptographiques de la carte à circuit intégré 31. Le traitement des requêtes de haut niveau comprend la traduction de ces requêtes en une commande élémentaire ou une séquence de commandes élémentaires qui sont exécutées par le dispositif personnel de sécurité. Les requêtes de haut niveau sont formulées indépendamment de la configuration matérielle et/ou logicielle du dispositif personnel de sécurité, c'est-à-dire qu'elles ne sont pas formulées directement en fonction du dispositif personnel de sécurité.

Les requêtes de haut niveau contiennent des informations qui sont liées spécifiquement au processus qui sera exécuté par le logiciel filtre. Selon un exemple simple, une requête de haut niveau peut comprendre une: commande élémentaire unique à transmettre au dispositif personnel de sécurité, par exemple un APDU ("Application Protocol Data Unit"), dans le cas d'une carte à microcircuit, attaché à un code MAC d'authentification de message qui permettra au logiciel filtre F de vérifier l'origine et l'intégrité de cette requête avant d'envoyer la commande élémentaire au dispositif personnel de sécurité. Selon un exemple plus complexe, tel qu'une requête de signature d'un document, la requête de haut niveau sera transformée par le filtre F en une séquence de commandes élémentaires envoyées au dispositif personnel de sécurité et éventuellement à l'interface utilisateur. Ainsi, selon cette définition et du fait qu'elles contiennent des informations spécifiques devant être décodées par le filtre F indépendamment du dispositif personnel de sécurité, les requêtes de haut niveau sont dites être indépendantes du dispositif personnel de sécurité.

Le filtre F répond aux objectifs de sécurité recherchés dans la mesure où le logiciel de traduction qu'il comporte vérifie l'identité de l'application émettant les requêtes de services (ou directement l'origine des requêtes) et est implanté de manière à garantir l'intégrité et la confidentialité des opérations et données élémentaires mises en oeuvre pour répondre aux requêtes de services.

Un logiciel de traduction est un logiciel configuré pour un type de carte à micro-circuit et traduit une requête de haut niveau reçue d'un logiciel d'application en une commande élémentaire ou une séquence de commandes élémentaires exécutables par les cartes à micro-circuit et/ou une séquence d'échanges de données avec l'utilisateur.

Les requêtes de haut niveau sont une liste de commandes utilisées par les programmes applicatifs pour faire appel aux services de sécurité nécessaires pour identifier et authentifier la personne réalisant la transaction et garantir l'origine, l'intégrité et éventuellement la non-répudiation de la transaction. Une requête de haut niveau provenant d'une application (se trouvant sur un serveur ou sur l'ordinateur personnel PC ou NC) peut être caractérisée par un ou plusieurs des points suivants :
- elle est indépendante des moyens de base (moyens cryptographiques par exemple) mis en oeuvre pour satisfaire à sa demande et contient des informations spécifiques devant être traitées par le filtre F. Réciproquement, plusieurs applications peuvent utiliser le même fournisseur de services de sécurité, faisant alors appel à la même interface logique F-API définissant ces requêtes.
- le traitement de la requête permet de lier la transaction de manière certaine à l'utilisateur effectuant la transaction à l'aide d'au moins un paramètre secret, fixe ou variable, stocké dans la carte à circuit intégré de l'utilisateur.
- elle comporte éventuellement une information ou des informations permettant au logiciel filtre F de vérifier son origine et son intégrité. L'authentification peut se faire à l'aide d'un code de type " Message Authentication Code ou MAC " ou bien de type " signature électronique " associé à la requête.
- dans le cas où la transaction n'est pas saisie par l'utilisateur sur le module terminal lui-même, la requête contient éventuellement l'information nécessaire pour permettre à l'utilisateur de vérifier, s'il le souhaite et si le module terminal supporte cette option, les données essentielles de la transaction.

L'interface logique F-API permettant l'échange des requêtes de sécurité de haut niveau entre les applications et le logiciel de traduction du filtre F peut être standardisée de manière à être commune à différents programmes applicatifs. Ainsi, la requête de type " Signature " peut être utilisée par une messagerie électronique ou par un logiciel d'achat. Il est ainsi possible de changer l'application tout en conservant le fournisseur de services de sécurité ou réciproquement de remplacer le fournisseur de services de sécurité sans modifier l'application.

Afin de garantir l'intégrité de la chaîne de confiance entre l'application et la carte, le logiciel filtre F de traduction identifie, voire authentifie l'origine et l'intégrité des requêtes qu'il reçoit. Différentes méthodes peuvent être envisagées pour identifier l'application émettant les requêtes :
- un code d'identification peut être intégré dans la requête elle- même puis vérifié par le logiciel filtre à partir des informations qu'il contient ou qui peuvent être stockées dans la carte à circuit intégré ;
- le même but peut être atteint en comparant le résultat d'une opération de hachage exécuté par le logiciel filtre sur le logiciel applicatif émettant la requête avec un résultat préalablement stocké dans la carte par exemple. Cette dernière solution est particulièrement adaptée au cas où l'application est implantée sur le PC de l'utilisateur ;
- l'authentification peut également être réalisée en associant à la requête un code de type " MAC calculé à partir du contenu de la requête et d'une clé secrète partagée entre l'application et le logiciel filtre. Un principe équivalent peut être utilisé avec une signature de la requête calculée avec les mêmes informations et une clé privée connue de l'application, la signature étant vérifiée avec la clé publique correspondante connue du logiciel filtre.

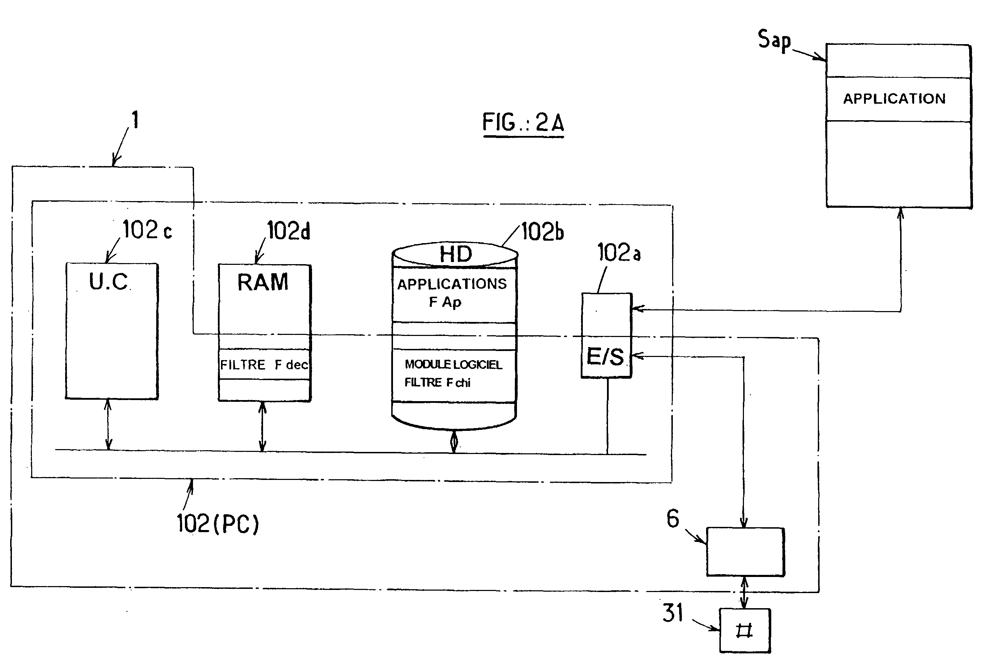

La figure 2A décrit une première forme de réalisation pour laquelle le module terminal 1 est un ordinateur personnel PC 102, la liaison avec la carte à circuit intégré 31 s'effectuant au moyen d'un lecteur 6 connecté ou intégré à l'ordinateur PC 102. L'ordinateur personnel 102 comprend des interfaces d'entrée/sortie 102a avec le lecteur 6 et le serveur Sap. Suivant la nature du lecteur connecté au PC, les éléments d'interface avec l'utilisateur peuvent être le clavier et l'écran du PC lui-même, ou bien un clavier et/ou un afficheur de type LCD par exemple implanté sur le lecteur. Dans ce mode de réalisation, le filtre F est implanté et exécuté sur l'ordinateur PC 102. Le filtre F, et donc le logiciel de traduction qu'il contient, peut alors être stocké sur le disque dur HD 102b de l'ordinateur personnel 102. Pour être exécuté par l'unité de calcul ou microprocesseur 102c du PC, le logiciel filtre est ensuite chargé dans la mémoire vive RAM 102d de l'ordinateur personnel 102.

Le disque dur d'un ordinateur PC étant difficile à protéger, le logiciel filtre F, ou tout au moins la partie sensible de ce logiciel, peut être chiffré. Pour cela il peut être décomposé en au moins 2 modules : un module de chargement/déchiffrement Fcd et un deuxième module correspondant au logiciel filtre lui-même chiffré, Fchi. Le premier module permet le chargement du deuxième module en mémoire RAM, son déchiffrement, puis le lancement de son exécution. En se référant à la Figure 2A, le module logiciel déchiffré et chargé en RAM est nommé Fdec.

L'utilisation d'un langage de programmation tel que Java, par des mécanismes de sécurité intrinsèques au langage lui-même, permet de renforcer la protection du logiciel

Une autre méthode de vérification de l'intégrité du logiciel filtre est de faire signer le deuxième module par une autorité garante du contenu du logiciel filtre au moyen d'une clé privée conservée secrète par cette autorité. Le premier module de chargement effectue alors, simultanément à l'opération de déchiffrement, une opération de hachage sur le deuxième module et vérifie la signature de ce module au moyen de la clé publique associée à la clé privée de l'autorité.

L'ensemble des opérations décrites dans les paragraphes précédents implique l'utilisation de clés sur lesquelles reposent la sécurité de l'application. Ces clés peuvent être cachées dans le module de chargement, stockées dans le lecteur 6, ou bien stockées dans la carte à circuit intégré 31 elle-même. Un autre mode de réalisation possible consiste à implanter le module de déchiffrement et de vérification d'intégrité dans le lecteur 6.

L'objet de l'invention est de s'assurer qu'un pirate ne puisse pas utiliser la carte à circuit intégré d'un utilisateur à son insu, par exemple en modifiant le logiciel filtre pilotant la carte ou le logiciel application, ou bien en implantant un logiciel virus qui court-circuiterait l'application ou le logiciel filtre mis en place. Le mode de réalisation décrit précédemment et ses variantes répondent à ces risques, en permettant la vérification:
- de l'intégrité du logiciel filtre et
- de l'origine et de l'intégrité des commandes envoyées à la carte à travers le lecteur 6, en les authentifiant à l'aide d'un code de type MAC par exemple. La vérification du MAC peut être effectuée par le lecteur 6 ou la carte 31. Une protection équivalente pourrait être obtenue en chiffrant le dialogue entre le logiciel filtre et le lecteur 6. Un logiciel virus cherchant à court-circuiter le logiciel filtre enverrait donc des commandes non authentifiées ou incorrectement chiffrées au lecteur 6 ou à la carte 31 ; en conséquence ces commandes seraient rejetées par le lecteur ou la carte, empêchant le virus d'arriver à ses fins. Afin qu'un fraudeur ne puisse déterminer les clés utilisées sur un terminal en analysant le fonctionnement d'un autre terminal, les clés utilisées par divers terminaux devront être diversifiées.

Les mécanismes de chiffrement et de signature qui peuvent être envisagés pour répondre au besoin de protection du logiciel filtre sont bien connus des hommes de l'art et reposent sur les techniques cryptographiques existantes exposées, par exemple, dans l'ouvrage de Bruce Schneier intitulé "Applied Cryptography, Protocols, Algorithms, and Source Code in C" publié chez John Wiley and Sons, Inc., 1994, et qui ne seront donc pas décrits en détail ici.

L'implantation du logiciel filtre dans un ordinateur personnel PC ne permet pas de garantir le même degré de sécurité qu'une implantation dans un terminal dédié pouvant offrir des mécanismes de sécurité matériels supplémentaires comme décrit dans les autres formes de réalisation présentées ultérieurement, ces mécanismes procurant une protection physique au logiciel filtre et aux secrets qu'il contient.

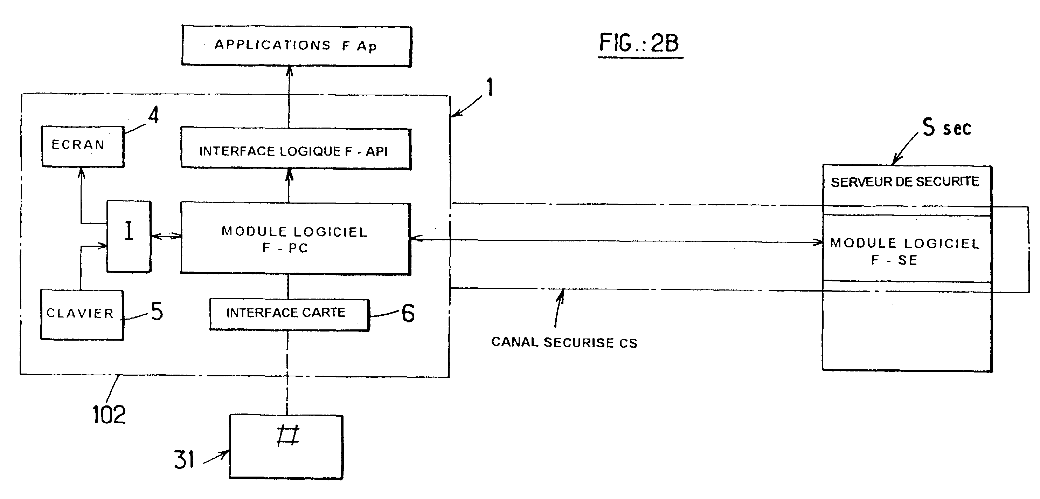

Une variante d'exécution du mode de réalisation de la figure 2A est présenté à la figure 2B. Cette variante met à profit la souplesse et la facilité de connexion d'un ordinateur personnel à un réseau. Cette connexion permet en effet le déport d'une partie du logiciel filtre, et en particulier des secrets, dans un serveur sécurisé Ssec.

Dans le cas de la Figure 2B, le logiciel filtre est décomposé en deux modules logiciels, un module F-PC implanté sur l'ordinateur personnel PC 102 et un module F-SE implanté sur un serveur de sécurité Ssec. La mémoire programmable à laquelle il est référence précédemment et stockant le logiciel filtre, est donc dans cette variante d'exécution implantée dans le serveur sécurisé Ssec, c'est-à-dire hors d'atteinte d'utilisateurs non autorisés. De même, le logiciel filtre, ou tout au moins la partie sensible du logiciel filtre F-SE requérant une protection, est exécuté sur le serveur sécurisé Ssec.

Le module logiciel F-PC implanté sur l'ordinateur personnel PC 102 est relié par un canal sécurisé CS au serveur de sécurité Ssec. Ce canal sécurisé est en fait un canal de communication chiffré permettant un échange de données protégé entre les deux modules logiciels filtre F-PC et F-SE et éventuellement une authentification réciproque des deux modules F-PC et F-SE. Ce canal sécurisé peut, par exemple, reposer sur des protocoles de communication bien connus tels que SSL.

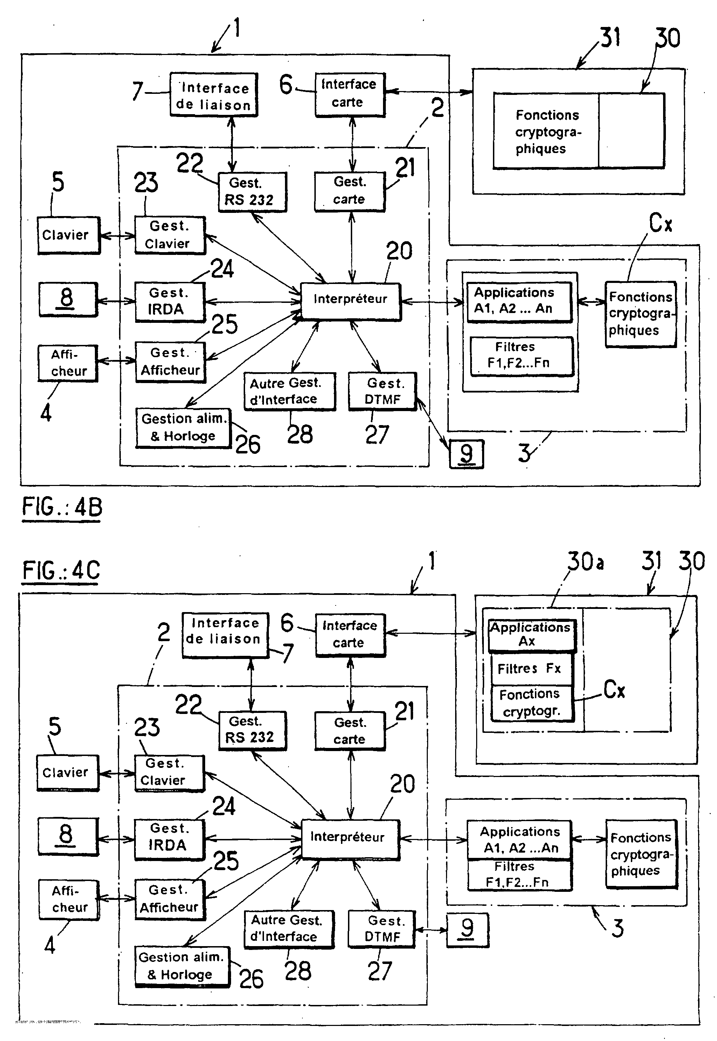

L'établissement de ce canal sécurisé CS permet donc au premier module logiciel filtre F-PC de transmettre au deuxième module logiciel filtre F-SE, les requêtes reçues de l'application FAp à travers l'interface logique F-API, ainsi que les informations liées à l'identification de l'application émettant ces requêtes. Ce deuxième module logiciel F-SE va ensuite, après avoir vérifié les informations relatives à l'application et, en fonction de l'application et éventuellement des droits de l'utilisateur, traduire ces requêtes en une suite de commandes destinées à la carte à puce 31 et au pilotage des échanges de données avec l'utilisateur. Ces commandes crées par le module F-SE sont ensuite envoyées au premier module F-PC qui les aiguille vers l'élément concemé : le PC lui même pour ce qui concerne les commandes de pilotage des échanges avec l'utilisateur ou bien la carte à circuit intégré. Pour que les commandes de pilotage des échanges avec l'utilisateur puissent être exécutées sur le PC, le PC devra comporter un module logiciel I, dit interpréteur. Ce logiciel interpréteur permet l'affichage de messages sur l'écran 4 et la saisie d'information par l'utilisateur sur le clavier 5. Ce module logiciel interpréteur sera plus précisément décrit en regard des figures 4B et 4C.

Ce second mode d'exécution est basé sur les mécanismes décrits à propos du premier mode d'exécution de la figure 2A en ce qui concerne l'identification de l'application (hachage ou signature par exemple) et la protection des commandes envoyées à la carte (ajout d'un code de type authentification de message MAC, par exemple). Il offre par contre un degré de sécurité supérieur dans la mesure où le module logiciel filtre F-SE assurant la traduction des requêtes de haut niveau reçues de l'application Fap est exécuté dans un environnement sécurisé. Dans le contexte de l'invention, le serveur Ssec est dit sécurisé s'il n'est pas accessible physiquement ainsi que logiquement, c'est dire à travers une connexion réseau, à des personnes non autorisées.

Ce second mode d'exécution de la figure 2B est bien adapté à des applications mises en oeuvre dans un environnement fermé ou privatif contrôlé par une autorité centrale, car elle nécessite un serveur protégé dont l'administration doit être centralisée. Ce second mode d'exécution offre de plus la possibilité de définir une politique d'accès centralisée aux services cryptographiques offerts par la carte à circuit intégré. Cette politique d'accès peut être basée sur les applications requérant les services de la carte et sur les utilisateurs eux mêmes. Elle permet, par exemple, dans la cas d'une entreprise ayant distribué à ses employés ou à ses clients des cartes à circuit intégré leur permettant de signer des courriers électroniques ainsi que des transactions bancaires, de s'assurer que seuls les utilisateurs autorisés pourront signer : ce mécanisme peut être mis en oeuvre grâce au canal sécurisé CS. A chaque requête de signature émise par une des applications considérée comme valide par l'entreprise (la messagerie électronique et le logiciel de transactions bancaires), le module logiciel F-SE effectuera une demande d'authentification de l'utilisateur. Cette demande peut, par exemple, être effectuée en envoyant un nombre aléatoire, challenge ou défi via le canal sécurisé CS à la carte 31. Après saisie par l'utilisateur de son code confidentiel, la carte à circuit intégré calculera un mot de passe dynamique en chiffrant le défi à l'aide d'une clé secrète qu'elle contient. Le mot de passe sera ensuite transmis via le canal CS au module logiciel F-SE. Le module logiciel F-SE, connaissant l'utilisateur et donc la clé secrète contenue dans sa carte, comparera le mot de passe reçu au mot de passe attendu. Ce mécanisme connu sous le nom d'authentification en mode challenge - réponse permet au module logiciel F-SE de valider l'identité de l'utilisateur. Ceci permet donc à l'entreprise ayant remis les cartes à circuit intégré aux utilisateurs de s'assurer que seuls les utilisateurs encore autorisés peuvent par exemple signer des transactions bancaires.

Le serveur Ssec, grâce aux moyens sécurisés et centralisés qu'il représente, permet non seulement une implantation sécurisée du logiciel filtre F-SE mais aussi la possibilité de mettre en place une politique centralisée de contrôle de l'utilisation des services de sécurité offerts par la carte à circuit intégré. Le serveur Ssec permet la mise en place d'une politique centralisée du fait qu'un même serveur peut être en liaison avec une pluralité des modules logiciels F-PC implantés sur les ordinateurs personnels d'une pluralité d'utilisateurs. Le serveur Ssec permet ainsi la définition et le contrôle centralisés des conditions d'utilisation des services de sécurité offerts par les cartes remises aux différents utilisateurs, en fonction du profil de l'application requérant les services et des droits desdits utilisateurs. La mise en place de cette politique centralisée implique donc de stocker dans le serveur les informations nécessaires, c'est-à-dire les droits des utilisateurs d'utiliser tel service de sécurité en liaison avec telle application.

Ce second mode d'exécution de la figure 2B, bien adapté aux environnements privés, est par contre difficilement applicable à des applications ouvertes pour lesquelles la mise en place d'un serveur central sécurisé Ssec n'est pas envisageable.

La Figure 3 illustre un module terminal reprenant des principes d'architecture fonctionnelle similaires à ceux de la Figure 2B dans une forme de réalisation différente, ne nécessitant pas de serveur centralisé. Le module terminal selon la deuxième forme de réalisation de la Figure 3 présente un très haut degré de sécurité, lui permettant ainsi d'assurer directement la protection locale du logiciel filtre F.

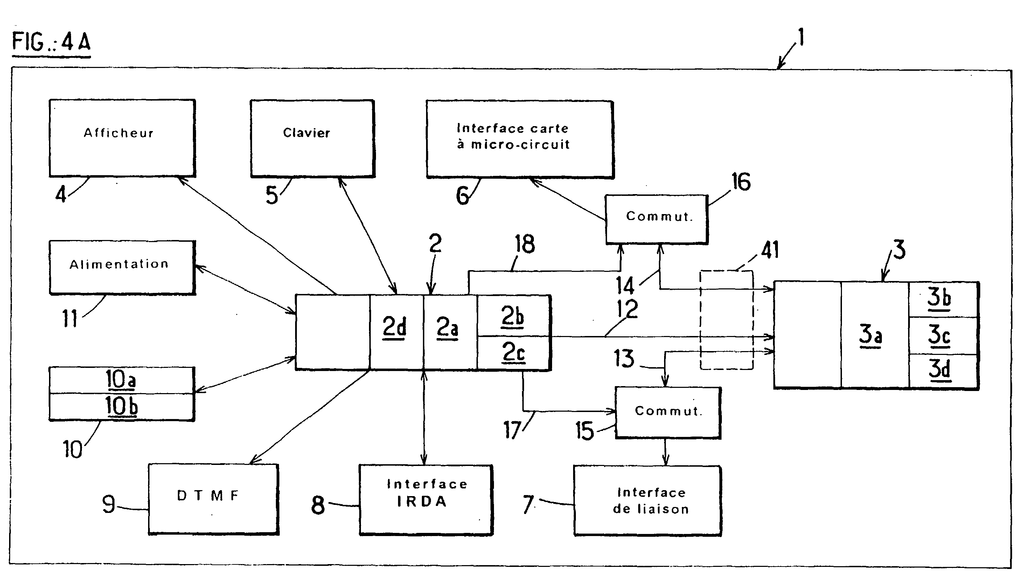

Dans le cas de la figure 3, le module terminal 1 se présente sous la forme d'un boîtier, portable ou non, dont une face porte l'écran d'affichage 4 et le clavier 5 et dans lequel sont implantés des circuits électroniques, de préférence de manière telle que ceux-ci soient inaccessibles depuis l'extérieur. Le boîtier 1 contient le lecteur 6 et présente une ouverture de réception de la carte à micro-circuit 31 dans le lecteur 6. Le mode d'exécution décrit en référence aux Figures 3, 4A, 4B et 4C ne doit pas être considéré comme se limitant à un terminal dédié. La description qui suit peut tout à fait être appliquée à un terminal construit autour d'un ordinateur personnel de type PC ou NC.

Selon un premier mode d'exécution, illustré à la figure 4A, de cette deuxième forme de réalisation du module terminal de la figure 3, les circuits électroniques du module terminal 1 sont organisés autour d'un microcontrôleur standard 2 et d'un microprocesseur 3 sécurisé, qui sont connectés entre eux par une liaison et implantés de manière permanente dans le boîtier du module 1. En variante, le microprocesseur 3 peut être enfichable sur le module 1 au moyen d'un connecteur 41 représenté en traits interrompus à la figure 4A. II est décrit ici un mode d'exécution générique basé sur un microcontrôleur standard. Dans un mode d'exécution particulier qui sera décrit ultérieurement, le microcontrôleur 2 peut en fait être un PC 102 du type de celui présenté dans la Figure 2B.

Le microcontrôleur standard 2 comprend une unité de traitement 2a, de la mémoire temporaire (RAM) 2b, et de la mémoire permanente (ROM) 2c. Il s'agit de préférence d'un microprocesseur "monochip" dont le programme est masqué dans la mémoire permanente 2c et qui intègre dans un même circuit intégré des moyens de gestion ou pilotage d'interfaces standards, l'unité de traitement 2a et les mémoires temporaire 2b et permanente 2c.

Les interfaces ou périphériques gérées par le microcontrôleur 2 comprennent notamment l'écran 4 d'affichage de données, par exemple à cristaux liquides, le clavier 5 pour l'introduction de données par un utilisateur, le lecteur 6 de carte à micro-circuit, une interface 7 de liaison externe, par exemple du type RS 232 ou PCM-CIA, une interface 8 de liaison par infrarouge, et un dispositif DTMF 9 pour la transmission de données sur une ligne téléphonique.

Les composants du module 1 comprennent également une horloge 10 et une source 11 d'alimentation électrique des différents circuits et composants du module 1. La source 11 d'alimentation électrique peut être constituée par des piles ou une batterie si le module 1 est portable et autonome.

La tâche du microcontrôleur standard 2 est de gérer l'environnement, c'est-à-dire de piloter les interfaces 4-9 et l'horloge 10, ainsi que la source d'alimentation 11 pour alimenter sélectivement le microprocesseur sécurisé 3 en énergie électrique dans le cas d'un module 1 autonome.

Le microcontrôleur standard 2 nécessite ainsi peu de puissance de calcul, peu de mémoire temporaire (RAM) et pas de mémoire semi-permanente (EPROM ou EEPROM). Le microcontrôleur 2 est protégé en écriture du fait que ses programmes (pilotage d'interfaces et, comme décrit dans la suite, interpréteur, gestion des horloges et de l'alimentation électrique, etc...) sont masqués en mémoire permanente 2c. Comme cela apparaîtra dans la suite, le microcontrôleur standard 2 peut également contenir un ou plusieurs paramètres secrets, sur la base desquels il peut être authentifié par le microprocesseur sécurisé du module terminal et/ou d'une carte à circuit intégré. Ces secrets doivent donc être protégés en lecture et en écriture. Ils seront de préférence stockés dans la mémoire temporaire (RAM) d'un microprocesseur "mono chip", qui n'est accessible ni en écriture, ni en écriture depuis l'extérieur. Le microcontrôleur standard 2 peut également être pourvu de fonctions de sécurité complémentaires, par exemple pour interdire des fraudes telles que l'affichage de données différentes de celles provenant du microprocesseur 3.

Il s'agit par conséquent d'un microcontrôleur d'un faible coût et ayant une faible consommation électrique, qui est particulièrement adapté à un produit portable. Ce microcontrôleur peut être par exemple du type MSM 63180 de la Société OKI.

De préférence, deux horloges sont prévues en 10 : une horloge à fréquence basse 10a, par exemple de fréquence 32,368 KHz et une horloge à fréquence élevée 10b, pouvant aller de 1 MHz à 12 MHz par exemple Le microcontrôleur 2 commande la connexion de son horloge système sur l'une ou l'autre de ces deux horloges.

L'horloge lente 10a cadence un dispositif de temporisation 2d du microcontrôleur 2 avec une période de 0,5 s pour réaliser une horloge temps réel dans le module 1. L'unité de traitement 2a peut également fonctionner à l'aide de l'horloge lente 10a pour les fonctions ne nécessitant pas de vitesse de calcul : dans ce cas l'horloge système du microcontrôleur 2 est connectée sur l'horloge lente 10a et l'horloge rapide 10b est arrêtée. Ce mode de fonctionnement permet de limiter la consommation électrique du module 1, ce qui est avantageux si celui-ci est portable et alimenté par une pile électrique.

Le microprocesseur 3 sécurisé en lecture et en écriture comprend une unité centrale 3a et des mémoires temporaire (RAM) 3b et permanente (ROM) 3c, ainsi qu'une mémoire semi-permanente reprogrammable électriquement (EEPROM ou Flash RAM par exemple) 3d pour le stockage, entre autres, des programmes d'application du module 1.

Ce microprocesseur sécurisé 3 est du type de ceux utilisés dans les cartes à micro-circuit et il présente un nombre limité d'entrées et de sortie, ses bus internes étant inaccessibles depuis l'extérieur. De par sa fabrication, il intègre d'autres mécanismes de sécurité propres à ce type de microprocesseur et bien connus des spécialistes de la technique, tels que matrice de sécurité, brouillage de mémoire, contrôle de la fréquence d'horloge, contrôle de la remise à zéro (RESET), etc...

Grâce au fait que le microprocesseur 3 possède une mémoire semi-permanente 3d, il est possible d'y charger depuis l'extérieur, par exemple à partir d'un serveur ou d'une carte à micro-circuit, un ou des programmes d'application. Il est ainsi possible, en fonction des besoins, de faire évoluer la ou les applications (contrôle d'accès, transaction financières et/ou commerciales, porte-monnaie électronique, etc...) auxquelles est destiné le module 1. Il est également possible, si la taille de la mémoire semi-permanente 3d le permet, d'y implanter de nouvelles applications au cours de son utilisation.

Selon la version choisie, le microprocesseur sécurisé 3 peut assurer le calcul de fonctions cryptographiques requérant des calculs importants mis en oeuvre dans les algorithmes asymétriques de type RSA ou DSA, ou bien mettre en oeuvre des algorithmes plus simples, par exemple du type DES. Le microprocesseur sécurisé 3 peut être, par exemple :
- un microprocesseur SIEMENS SLE44C160S, non cryptographique, doté de 14 Ko de mémoire ROM et de 16 Ko de mémoire EEPROM ;
- un microprocesseur SGS THOMSON ST16CF54A cryptographique doté de 16 Ko de mémoire ROM, de 4Ko de mémoire EEPROM et de 480 octets de mémoire RAM ;
- un microprocesseur PHILIPPS P83C858 cryptographique doté de 20 Ko de mémoire ROM et de 8 Ko de mémoire EEPROM.

Le microprocesseur sécurisé 3 est connecté, d'une part par la liaison 12 au microcontrôleur standard 2, d'autre part par des liaisons 13 et 14 à l'interface externe 7 et au lecteur 6 de carte à micro-circuit par l'intermédiaire de commutateurs-adaptateurs d'interface 15 et 16 respectivement. Les commutateurs-adaptateurs 15 et 16 sont commandés par le microcontrôleur standard 2 via des liaisons 17 et 18 respectivement.

Le microcontrôleur standard 2 comprend un programme d'interprétation ou interpréteur 20 (Fig. 4B et 4C) stocké dans la mémoire ROM 2c et permettant à celui-ci d'exécuter des commandes générées par le logiciel de traduction des requêtes de haut niveau faisant partie du ou des programmés d'application, comme cela sera décrit dans la suite. Cet interpréteur 20 permet ainsi au(x) programme(s) d'application stocké(s) dans le microprocesseur sécurisé 3 de piloter les interfaces 4-9 via la liaison 12. Cependant, le ou les programmes d'application peuvent être localisés et exécutés ailleurs que dans le microprocesseur 3 sécurisé en lecture et en écriture, par exemple dans une carte à micro-circuit 31 insérée dans l'interface 6, telle qu'une carte adaptée pour supporter des mécanismes de téléchargement et d'exécution des applications comme décrit dans la norme NF EN 726-3 intitulée "Cartes à circuit intégré et terminaux pour les télécommunications. Partie 3 : Spécifications de la carte indépendantes des applications".

Les programmes d'application peuvent en outre, en fonction des règles de sécurité auxquelles ils sont soumis, être distribués entre ces différentes localisations.

Le schéma fonctionnel de la figure 4B illustre une première configuration d'architecture logicielle du module 1 de la figure 4A dans laquelle l'ensemble des programmes d'application A1, A2, ..... An et des fonctions de sécurité (calcul de condensé, algorithmes cryptographiques symétriques tels que DES, triple DES, ou asymétriques tels que proposés par RSA) est mis en oeuvre dans le microprocesseur sécurisé 3.

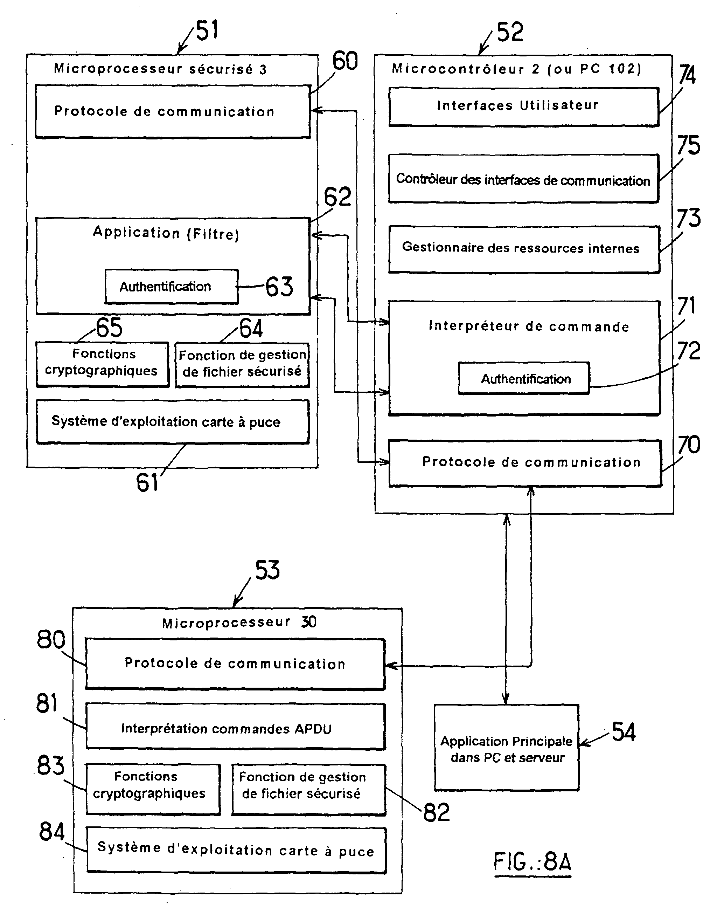

Les applications nommées ci-dessus et dans la suite de la description A1, A2, ..... An comprennent au minimum les filtres F1, F2, ..., Fn, et donc en particulier les logiciels de traduction des requêtes émises par le ou les fournisseurs de services applicatifs FAp faisant partie de l'application principale 54 (Figure 8A).

Le microcontrôleur standard 2 gère l'environnement au moyen de différents programmes de gestion ou gestionnaires d'interface à savoir :
- un gestionnaire 21 du lecteur ou interface 6 de carte à micro-circuit;
- un gestionnaire 22 de l'interface 7 de liaison série ;
- un gestionnaire 23 du clavier 5 ;
- un gestionnaire 24 de l'interface 8 de liaison par infrarouge ;
- un gestionnaire 25 de l'afficheur 4 ;
- un gestionnaire 26 de l'horloge 10 et de la source d'alimentation 11;
- un gestionnaire 27 de l'interface DTMF 9 ;
- un gestionnaire 28 d'autres interface, dans l'hypothèse où le module 1 comporte une ou des interfaces autres que celles représentées à la figure 2.

Ainsi, le microprocesseur sécurisé 3 peut piloter les interfaces au moyen de commandes qui sont interprétées par l'interpréteur 20 et exécutées par le microcontrôleur standard 2 grâce aux gestionnaires 21-28.

La figure 4C illustre une seconde configuration logicielle du module 1 de la figure 4A dans laquelle une ou plusieurs applications Ax et une ou plusieurs fonctions cryptographiques Sx sont stockées dans une mémoire reprogrammable 30a d'un microprocesseur sécurisé 30 d'une carte à micro-circuit 31. Lorsque la carte 31 est introduite dans le lecteur 6, le microprocesseur 30 exécute les applications Ax et les fonctions cryptographiques Sx, tandis que d'autres applications et fonctions de sécurité peuvent être résidentes dans et mises en oeuvre par le microprocesseur sécurisé 3 du module 1. C'est ainsi, par exemple, que le microprocesseur 30 de la carte 31 peut assurer une fonction de signature électronique dans l'hypothèse où le microprocesseur sécurisé 3 n'intègre pas un processeur de calcul dédié (cryptoprocesseur). Réciproquement, si le microprocesseur sécurisé 3 intègre un cryptoprocesseur, il est également possible qu'une application présente dans la carte à micro-circuit 31 fasse appel à des commandes cryptographiques du module 1, commandes qui seront exécutées par le microprocesseur sécurisé 3.

Dans cette seconde configuration, qui pour le reste est identique à celle de la figure 4B, l'interpréteur 20 joue vis-à-vis du microprocesseur 30 le même rôle que celui qu'il remplit vis-à-vis du microprocesseur sécurisé 3. Le module 1 peut ainsi exécuter des applications différentes selon le type de carte 31 à micro-circuit introduit dans le lecteur 6, par exemple :
- une authentification de l'utilisateur dans le cadre d'une transaction bancaire (consultation de compte, virement de fonds, etc...) effectuée via une ligne téléphonique au moyen de l'interface DTMF 9 ;
- une consultation du solde d'un porte-monnaie électronique, ou le rechargement de ce porte-monnaie, à partir du module 1, lorsqu'une carte à micro-circuit 31 remplissant la fonction de porte-monnaie est introduite dans le lecteur 6. En outre, le module 1 permet de gérer plusieurs cartes porte-monnaie différentes : porte-monnaie bancaire, porte-monnaie spécifique à une collectivité par exemple ;
- lecture d'un dossier médical sur une carte médicale ;
- lecture de points de fidélité sur une carte dans laquelle des points de fidélité sont attribués à un consommateur en fonction d'achats effectués, de sa participation à des opérations de fidélisation de clientèle, etc...

Le mode d'exécution décrit ci-dessus à la Figure 4A ainsi que les configurations logicielles présentées dans les Figures 4B et 4C s'appliquent, de manière analogue, à un terminal construit autour d'un PC conventionnel équipé en outre du microprocesseur sécurisé 3. Dans ce mode d'exécution, le microcontrôleur 2 correspond au PC 102 tel qu'il est présenté à la Figure 2A, l'unité de traitement 2a correspond au microprocesseur 102c du PC, et les mémoires RAM 2b et permanentes 2c correspondent respectivement à la mémoire RAM 102d et au disque dur 102b. De même les entrées/sorties 102a du PC correspondent aux modules d'interfaces 7, 8 et 12 de la Figure 4A. La connexion entre le microprocesseur sécurisé 3 et le PC 102 peut être une liaison série ou parallèle, ou bien encore une connexion au bus interne du PC, du type PCMCIA, ou une connexion directe sur la carte mère du PC. En variante, le microprocesseur sécurisé 3 peut être intégré de manière fixe, ou amovible via le connecteur 41, au clavier du PC.

Dans ce cas, le module logiciel interpréteur 20 ainsi que les modules logiciels de gestion des périphériques 21 à 28 sont implantés et exécutés sur le PC. L'architecture fonctionnelle de ce mode d'exécution est équivalente à celle présentée à la Figure 2B, le module interpréteur 20 ainsi implanté sur le PC assurant le même rôle que le module interpréteur I de la Figure 2B : il exécute les commandes de pilotage des échanges avec l'utilisateur reçues du logiciel filtre F lui-même implanté de manière sécurisé dans le microprocesseur 3 (Figure 4B) ou la carte à circuit intégré 30 (Figure 4C).

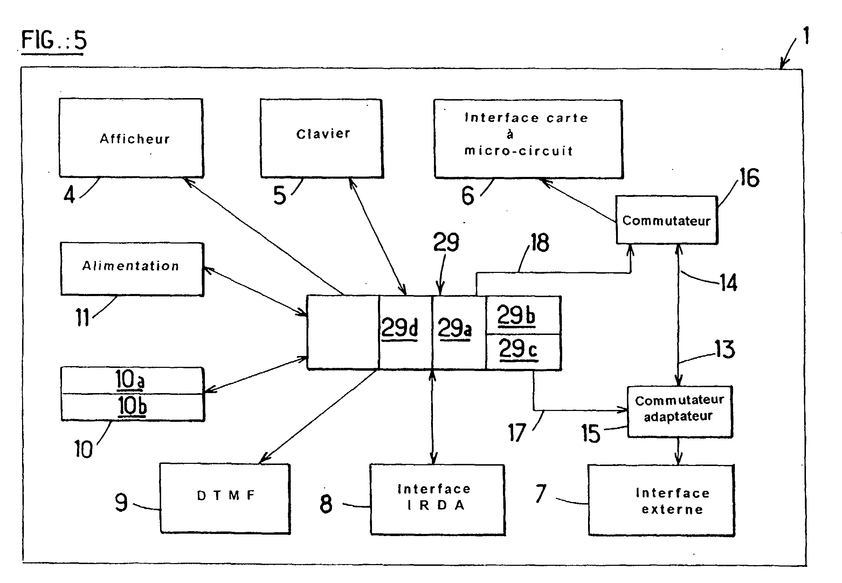

Le schéma de la figure 5 illustre un deuxième mode d'exécution de la deuxième forme de réalisation de l'invention, dans lequel les circuits électroniques du module terminal 1 sont organisés autour d'un seul microcontrôleur 29 remplaçant le microcontrôleur 2 et le microprocesseur 3 et pouvant offrir le même type de protection physique et logique que les microprocesseurs conçus pour les cartes à circuit intégré. Ce microcontrôleur gère l'ensemble des moyens d'interfaces 4-9 du module terminal. Il comporte une unité de traitement 29a, une mémoire temporaire (RAM) 29b, une mémoire permanente (ROM) 29c et une mémoire semi-permanente (EEPROM) 29d permettant le stockage du logiciel de traduction. L'unité de traitement 29a correspond à la fois à l'unité 2a de traitement de données permettant le pilotage des interfaces et à l'unité 3a de traitement permettant l'exécution du logiciel de traduction. De même que précédemment, le module terminal 1 peut être construit autour d'un ordinateur personnel PC 102 auquel serait connecté au bus interne un microcontrôleur sécurisé 29 pilotant ainsi directement l'écran d'affichage 4 et le clavier 5 du PC.

Dans une variante de réalisation, la mémoire dans laquelle est stockée le logiciel de traduction des requêtes de haut niveau, mémoire volatile de type RAM avec une alimentation de sauvegarde ou semi-permanente (EEPROM ou Flash RAM), peut être externe au microcontrôleur 29. Dans ce cas, le logiciel de traduction peut être chiffré et signé, ou protégé par un code de type MAC ("Message Authentication Code") de manière à assurer à la fois son intégrité et sa confidentialité. Le logiciel est lu par le microcontrôleur 29, déchiffré puis exécuté.

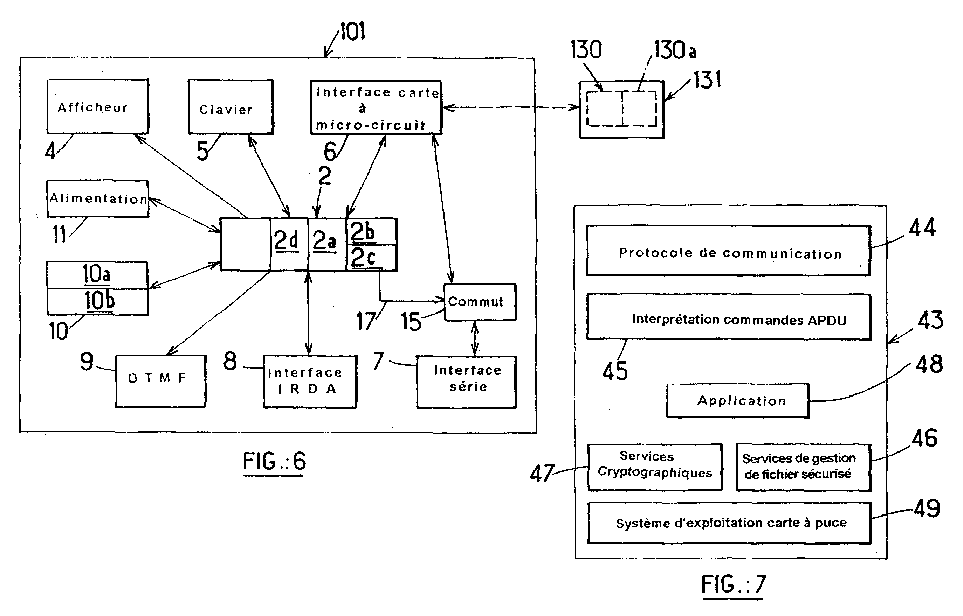

Selon un troisième mode d'exécution, représenté à la figure 6, de la deuxième forme de réalisation de l'invention, le module terminal 101 est dépourvu de microprocesseur sécurisé 3. Sur cette figure 6, les mêmes numéros de référence qu'à la figure 4A ont été conservés pour désigner les mêmes éléments. Le microcontrôleur 2 pilote l'interface 6 et le commutateur-adaptateur 15 pour permettre la connexion du microprocesseur sécurisé 130 d'une carte à micro-circuit programmable 131 présente dans l'interface 6 avec l'interface de liaison externe 7. Dans ce cas, l'ensemble des applications A et des fonctions cryptographiques C sont mémorisées dans une mémoire semi-permanente 130a (EEPROM ou Flash RAM) du microprocesseur sécurisé 130 de la carte à micro-circuit programmable 131, et mises en oeuvre par ce dernier comme décrit à la figure 4C à propos des applications Ax et des fonctions cryptographiques Cx.

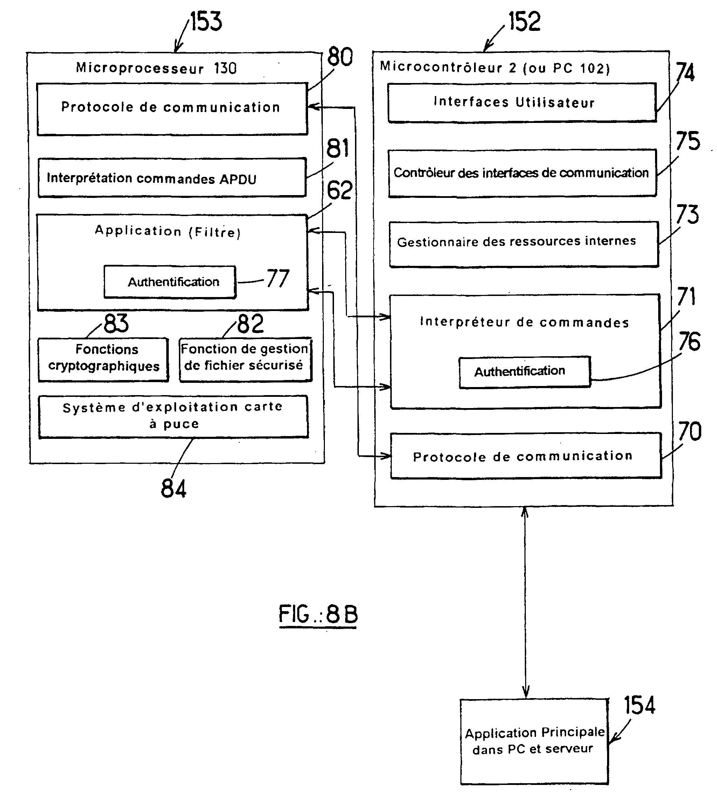

Dans les exemples décrits précédemment, dans un but de simplification, le microprocesseur 30, 130 de la carte à circuit intégré ainsi que le microprocesseur sécurisé 3 éventuellement implanté dans le module terminal comporte un seul port de communication. Ceci implique que dans ces exemples, les échanges entre les différentes entités, à savoir l'unité électronique 154 (figure 8) contenant l'application principale, le microprocesseur sécurisé 3 et le microprocesseur 30, 130 de la carte circuit intégré se font à travers le microcontrôleur 2 ou 29 du module terminal. Ces descriptions ne doivent pas être considérées comme limitatives : d'autres mises en oeuvre peuvent être envisagées dans le cadre de la présente invention. En effet, les microprocesseurs sécurisés de carte à circuit intégré actuellement disponibles, utilisables pour la carte elle même (microprocesseur 30, 130) ou dans le module terminal (microprocesseur 3), peuvent comporter deux ports de communication. Différentes formes de réalisation optimisant les flux de communication sont donc aisément envisageables avec ce type de microprocesseur. Dans le cas de la figure 4C, par exemple, un des ports de la carte à circuit intégré 31 peut être dédié au pilotage de l'interface utilisateur et donc relié au microcontrôleur 2, l'autre port étant relié à l'unité électronique comportant l'application principale moyennant une adaptation d'interface appropriée.

Suivant une caractéristique importante de l'invention, un logiciel filtre est implanté dans la mémoire reprogrammable EEPROM associée au microprocesseur sécurisé 3 ou 29 du module terminal 1 et/ou au microprocesseur sécurisé 30, 130 de la carte 31, 131. Ce logiciel filtre traduit de manière connue les requêtes de haut niveau en provenance du serveur Sap ou de l'ordinateur personnel PC en séquences de commandes élémentaires exécutables par ces microprocesseurs (commandes qui sont notamment définies par la partie 4 de la norme ISO 7816-4). En outre, suivant l'invention, ce logiciel filtre traduit ces requêtes de haut niveau en séquences d'échanges de données entre le module terminal 1, 101 et un utilisateur via les moyens d'interface tels que l'afficheur 4 et le clavier 5.

Cette solution offre l'avantage de réduire considérablement le débit de données échangé entre le module terminal 1, 101 et le serveur Sap ou le PC, mais requiert une implantation sécurisée du logiciel de traduction pour empêcher que les instructions envoyées à la carte à micro-circuit soient modifiées.

Ce logiciel filtre fait partie intégrante de la partie du logiciel d'application implantée dans le module terminal 1 et/ou la carte 31, 131 et il est donc téléchargeable.

La figure 7 illustre l'architecture logicielle conventionnelle d'une carte à micro-circuit ("smart card").

Les différentes couches de logiciels sont représentées par un bloc 43 qui comprend une couche logicielle 44 "protocole de communication" permettant de recevoir des commandes. Ces commandes sont décodées par une couche logicielle 45 "Interprétation commandes APDU" (APDU : "Application Protocol Data Unit" dont le rôle est d'orienter les commandes vers des modules de traitement qui peuvent être :
- un logiciel 46 de services de gestion de fichiers sécurisés ;
- un logiciel 47 de services cryptographiques ;
- un ou d'autres logiciels d'application 48

Les modules de traitement 46, 47, 48 s'appuient sur des services de base offerts par le système d'exploitation 49 de la carte à micro-circuit.

La figure 8A illustre l'architecture logicielle d'un système de mise en oeuvre de transactions sécurisées faisant appel à des modules terminaux 1 dotés d'un microprocesseur sécurisé 3, conformément au mode d'exécution de l'invention de la figure 4A.

Le bloc 51 désigne les logiciels exécutés par le microprocesseur sécurisé 3 du module terminal 1, le bloc 52 les logiciels exécutés par le microcontrôleur 2 ou PC 102 du module terminal 1, le bloc 53 les logiciels exécutés par le microprocesseur 30 d'une carte à micro-circuit 31, et le bloc 54 le logiciel principal d'application, ou Fournisseur de services applicatifs, implanté dans le serveur Sap ou un ordinateur personnel PC.

Le bloc 51 est similaire au bloc 43 de la figure 7, c'est-à-dire que le microprocesseur sécurisé 3 a une architecture semblable à celle d'une carte à circuit intégré. Le bloc 51 comprend:
- un logiciel 60 de protocole de communication.
- un système d'exploitation 61
- un bloc 62 représentant la partie du logiciel d'application implantée dans le module terminal 1, cette partie du logiciel d'application étant essentiellement constituée du logiciel filtre précité. Différents modules logiciels de ce type correspondant à différentes applications peuvent cohabiter dans le microprocesseur sécurisé 3.
- optionnellement, un logiciel 63 permettant d'assurer l'authentification du microcontrôleur standard 2 par le microprocesseur sécurisé 3 et l'authentification du microprocesseur sécurisé 3 du module terminal 1 par le microprocesseur 30 de la carte 31,
- un logiciel 64 de gestion de fichier sécurisé,
- un logiciel 65 de services cryptographiques.

Le bloc 52 comprend :
- un logiciel 70 de protocole de communication ;
- un interpréteur de commandes 71 correspondant au logiciel 20 des figures 4B et 4C ;
- un logiciel d'authentification 72 permettant, en liaison avec le logiciel 63, l'authentification du microcontrôleur standard 2 par le microprocesseur sécurisé 3 du module terminal 1 ;
- des logiciels 73 de gestion des ressources internes du microcontrôleur 2 ;
- des logiciels 74 de pilotage des interfaces avec l'utilisateur (gestionnaires 23 et 25 de l'écran 4 et du clavier 5) ;
- des logiciels 75 de pilotage des interfaces de communication 7, 8 et 9 (gestionnaires 22, 24, 27);

Enfin, le bloc 53 est similaire au bloc 43, mais ne comporte pas, dans l'exemple décrit par la figure 8A, de logiciel d'application ou filtre. Il comprend :
- un logiciel 80 de protocole de communication,
- un logiciel 81 d'interprétation de commandes APDU,
- un logiciel 82 de services de gestion de fichier sécurisé (contrôle du PIN par exemple),
- un logiciel 83 de services cryptographiques (calculs cryptographiques symétriques à clés secrètes ou asymétriques, à clés publiques et clés privées, etc...) permettant, entre autres, d'assurer, en liaison avec le logiciel 63, l'authentification du microprocesseur sécurisé 3 du module terminal 1 par le microprocesseur 30 de la carte 31,
- le système d'exploitation 84 du microprocesseur 30 de la carte 31.

Le protocole de communication 60, 70, 80 permet de gérer les échanges de données entre:
- le microprocesseur 30 de la carte 31 et le microcontrôleur standard 2 ou PC 102 du module terminal 1 ;
- le microprocesseur sécurisé 3 et le microcontrôleur 2 du module terminal 1 ;
- le microprocesseur sécurisé 3 du module terminal 1 et le microprocesseur 30 de la carte 31.

La figure 8B est une vue similaire à la figure 8A illustrant l'architecture logicielle du système dans le cas où le module terminal 101 ne comporte pas le microprocesseur sécurisé 3, conformément au troisième mode d'exécution du deuxième mode de réalisation de l'invention de la figure 6.

Sur la figure 8B, le bloc 152 désigne les logiciels exécutés par le microcontrôleur 2 du module terminal 101, le bloc 153 les logiciels exécutés par le microprocesseur 130 d'une carte à micro-circuit programmable 131, et le bloc 154 le logiciel principal d'application implanté dans le serveur Sap ou un ordinateur personnel PC.

Le bloc 152 comprend les mêmes logiciels 70, 71 et 73 à 75 que le bloc 52 de la figure 8A, et un bloc 76 qui est un logiciel d'authentification du microcontrôleur standard 2 du module terminal 101 vis-à-vis du microprocesseur 130 de la carte 131.

Le bloc 153 relatif au microprocesseur 130 de la carte 131 comprend les logiciels 62 et 80 à 84 des blocs 51 et 53 de la figure 8A, ainsi qu'un logiciel 77 permettant, en liaison avec le logiciel 76, d'assurer l'authentification du microcontrôleur standard 2 du module terminal 101 vis-à-vis du microprocesseur 130 de la carte 131.

A la différence d'un système conventionnel, dans le système de transaction sécurisée selon l'invention, le logiciel filtre 62 qui traduit les requêtes de haut niveau de l'application en commandes élémentaires exécutables par une carte à micro-circuit est implanté dans l'environnement utilisateur sécurisé, c'est-à-dire soit dans le module terminal 1 (pour les applications A1, A2.....An des modes d'exécution des figures 4A-4C et 5), soit dans une carte 31, 131 à mémoire semi-permanente utilisable avec le module terminal 1, 101 (pour les applications Ax du mode de réalisation de la figure 4C et pour toutes les applications du mode de réalisation de la figure 6).

Outre sa fonction de gestion d'une carte à micro-circuit, ce logiciel filtre 62 gère les interactions avec l'utilisateur, c'est-à-dire les séquences d'échange de données entre un utilisateur et le module terminal qui sont requises dans le cadre d'une application, échanges qui ont lieu par l'intermédiaire des moyens d'interface, à savoir l'écran 4 et le clavier 5. Il est à noter que l'invention n'est pas limitée à l'utilisation d'un écran et d'un clavier comme interfaces avec l'utilisateur et que tout autre type d'interface, par exemple vocale, présentant l'ergonomie requise, pourrait convenir.

Grâce à l'implantation sécurisée du logiciel filtre 62 dans le microprocesseur sécurisé 3 ou 29 du module terminal 1 ou le microprocesseur 30, 130 de la carte à micro-circuit 31, 131, la sécurité des transactions est assurée. En effet, les clés et règles nécessaires pour accéder à des fichiers de la carte à micro-circuit 31, 131 sont contenues dans le logiciel de traduction 62 et sont donc inaccessibles à des tiers.

Les fonctions remplies par le logiciel filtre 62 seront illustrées ci-après en prenant l'exemple d'une application visant le commerce électronique. L'application met en oeuvre les entités suivantes :
- un acheteur
- un commerçant,
- une banque.

Le commerçant dispose d'un serveur de commerce électronique Sap (serveur Web) accessible depuis le réseau Internet. Les acheteurs sont équipés de:
- un ordinateur PC permettant d'accéder au serveur Sap de commerce électronique, et grâce auquel l'acheteur peut consulter un catalogue de marchandises.
- une carte à circuit intégré 31 délivrée par la banque et dont le microprocesseur 30 contient une clé privée, mais ne dispose pas de capacités cryptographiques permettant d'effectuer une signature,
- un module terminal 1 selon le mode de réalisation de la figure 4A, doté d'un microcontrôleur standard 2, d'un microprocesseur sécurisé 3 disposant de capacités cryptographiques permettant la signature d'un message, d'un clavier 5, d'un afficheur 4, d'une interface carte à circuit intégré 6 et d'une interface série 7 pour sa connexion à un ordinateur PC.

Les principes de fonctionnement sont les suivants : la transaction est signée par le module terminal 1 à l'aide d'une clé privée détenue par la carte 31. Cette clé privée est protégée par un code porteur confidentiel (PIN) que l'acheteur doit saisir en milieu sécurisé, donc sur le terminal 1, et par une authentification préalable du terminal 1 par la carte 31 à l'aide d'une clé secrète Kauth. De plus la clé privée est transmise de manière chiffrée (par une clé Kchif) de manière à établir un canal de communication sécurisé entre le microprocesseur 30 de la carte à circuit intégrée 31 et le microprocesseur sécurisé 3 du terminal 1.

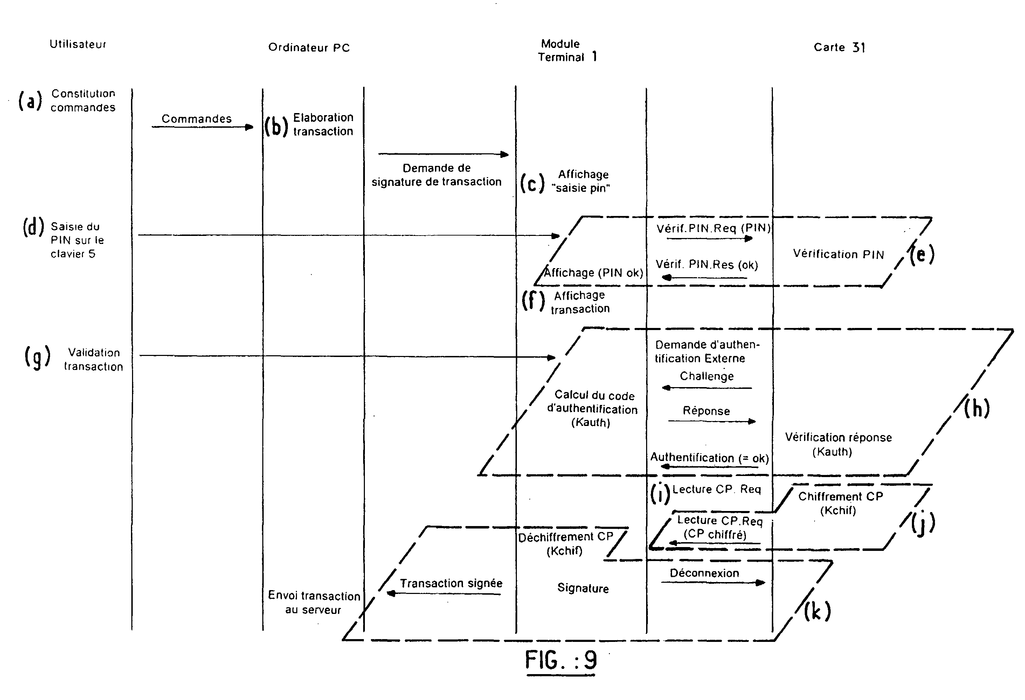

La figure 9 illustre les échanges entre les différentes entités :
a. l'acheteur constitue sa commande sur l'ordinateur PC,
b. l'ordinateur PC élabore la transaction à faire signer par l'acheteur (référence article, prix) et demande la signature de cette transaction au module terminal 1,
c. le module terminal vérifie l'origine de la demande de signature puis sollicite la saisie du code PIN par affichage d'un message "saisie PIN" sur son afficheur 4,
d. l'acheteur saisit son code porteur (code PIN) sur le clavier 5 du module terminal 1,
e. le PIN est envoyé par le module terminal 1 à la carte 31 pour vérification. Cette vérification étant positive, elle provoque la levée d'une de deux conditions d'accès à la lecture de la clé privée,
f. le module terminal 1 affiche la transaction sur son afficheur 4,
g. l'acheteur donne son accord, par appui sur une touche "validation" du clavier 5 du module terminal 1,
h. le module terminal 1 soumet une demande d'authentification externe à la carte 31. Cette authentification externe permet au microprocesseur sécurisé 3 du module terminal 1 de s'authentifier vis-à-vis du microprocesseur 30 de la carte 31 et de lever ainsi la deuxième protection d'accès à la clé privée. Cette authentification se fait en mode challenge/réponse sur la base d'un secret., Kauth, partagé par le module terminal 1 et la carte 31,
i. le module terminal 1 envoie une demande de lecture de clé privée à la carte 31,
j. toutes les conditions d'accès étant remplies, la carte 31 accepte la demande de lecture, et renvoie la clé privée, chiffrée par une clé secrète, Kchif, partagée par la carte 31 et le module terminal 1,
k. le module terminal 1 déchiffre la clé privée, signe la transaction au moyen de la clé privée, détruit la clé privée, se déconnecte de la carte 31 et envoie e la transaction signée à l'ordinateur PC qui la transmet au serveur S.

Cet exemple peut être transposé aisément à une transaction électronique effectuée sans ordinateur PC, le module terminal 1 se connectant directement à un serveur Sap par une liaison modem (figure 3), l'acheteur entrant la commande (référence produit) sur le module terminal 1.

Il est à noter que l'authentification du microprocesseur sécurisé 3 par la carte peut aussi être effectué à travers la commande de lecture de clé privée en lui associant un code d'authentification MAC (Message Authentification Code) calculé au moyen d'une clé secrète.

Cet exemple montre que le logiciel filtre 62 permet de traduire une requête de haut niveau "demande de signature de transaction" en une multitude de requêtes élémentaires adressées aux différentes interfaces du module terminal 1, à savoir l'interface 6 avec la carte à circuit intégré 31, l'interface afficheur 4, l'interface clavier 5, l'interface de connexion à l'ordinateur PC ou au serveur Sap.

Un tel logiciel filtre de traduction a un rôle d'écran, de filtre entre le monde extérieur, c'est à dire les applications, et les périphériques qu'il gère.

Il améliore la sécurité offerte du fait que :
1. il impose un séquencement aux ordres élémentaires envoyés. Par exemple, dans le cas illustré ci-dessus, il impose que la transaction soit validée par l'utilisateur avant d'être signée.
2. il dispose seul des paramètres secrets permettant de générer et d'authentifier ces ordres élémentaires. Ainsi il dispose seul des clés d'authentification et de chiffrement permettant de lire et déchiffrer la clé privée.

Lorsque le logiciel filtre est exécuté dans le microprocesseur sécurisé 3 du module terminal 1, ces propriétés permettent d'imposer une politique d'accès à la carte 31, politique qui n'est pas toujours complètement imposée par la carte elle-même, ou d'étendre les capacités d'une carte (capacité de signature déléguée au module terminal, utilisation dans un contexte non prévu lors de son déploiement initial).

Les avantages offerts en terme de sécurité par l'exécution du logiciel filtre dans le microprocesseur sécurisé du module terminal ou dans celui de la carte à circuit intégré ne sont possibles que parce que le logiciel s'exécute dans un environnement sécurisé permettant d'assurer que :
- les secrets contenus par le logiciel filtre ne sont pas accessibles du fait qu'ils sont mémorisés au sein du microprocesseur sécurisé 3, 29, 30 ou 130,
- la confidentialité et l'intégrité du logiciel filtre sont préservés, du fait que ce logiciel est mémorisé dans la microprocesseur sécurisé 3, 29, 30 ou 130.

Dans le cas où le module terminal 1 est un produit dédié, disposant de ses propres interfaces, afficheur 4 et clavier 5, l'objectif de sécurité est atteint grâce au fait que le logiciel pilotant les échanges de données avec l'utilisateur ne peut être modifié, dans la mesure où il est stocké de manière définitive dans la mémoire permanente 2c du microcontrôleur 2 ou de manière sécurisée dans le microcontrôleur 29. L'utilisateur peut ainsi valider en toute confiance le contenu de sa transaction grâce à l'afficheur 4 et au clavier 5, rendant optionnel la nécessité de vérifier l'identité de l'application ou l'origine et l'intégrité des requêtes.

D'autres mécanismes peuvent encore améliorer le niveau de sécurité de la chaîne de confiance entre le microprocesseur sécurisé de la carte à circuit intégré, l'éventuel microprocesseur sécurisé du module terminal, le microcontrôleur standard ou le PC du module terminal et l'utilisateur. Ces mécanismes sont les suivants :
A) téléchargement sécurisé du logiciel filtre ;
B) authentification du microcontrôleur standard par le microprocesseur sécurisé ou, ce qui est équivalent mais mieux adapté dans le cas d'un mode d'exécution du terminal autour d'un PC, authentification du module logiciel interpréteur I (20) par le logiciel filtre F (62), et/ou établissement d'un canal de communication sécurisée entre ces deux microprocesseurs ou les logiciels I et F,
C) protection d'un secret par le microcontrôleur standard,
D) authentification mutuelle et établissement d'un canal de communication sécurisé entre le microprocesseur sécurisé de la carte à circuit intégré et le microprocesseur sécurisé du module terminal,
E) authentification du module terminal, et éventuellement du couple module terminal-carte,
F) authentification de la carte à micro-circuit par le module terminal.

### A) Téléchargement sécurisé du logiciel filtre

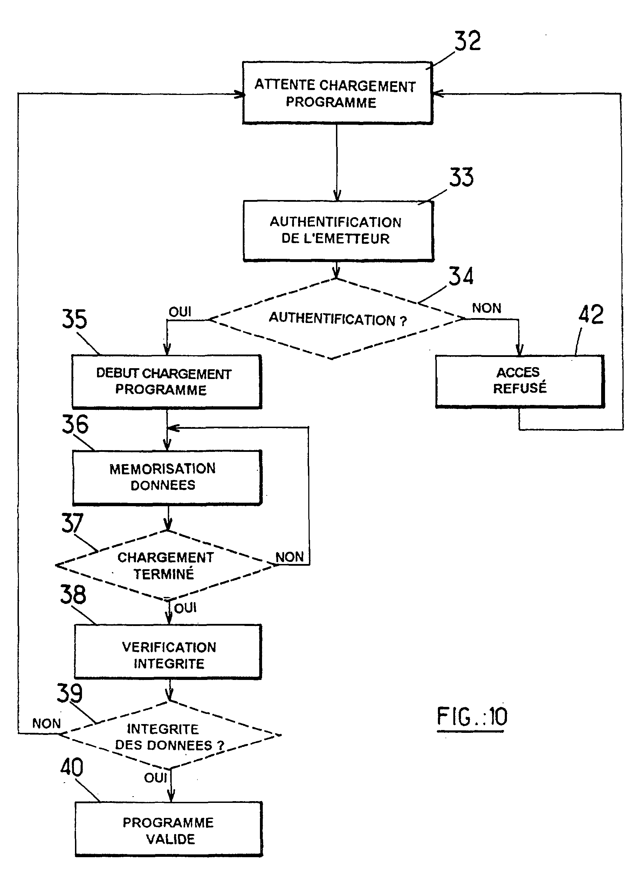

L'organigramme de la figure 10 illustre le processus de téléchargement d'un programme d'application (logiciel filtre) dans le microprocesseur sécurisé 3 ou 29 du module 1 ou le microprocesseur sécurisé 30, 130, d'une carte 31, 131 présente dans le lecteur 6. Ce téléchargement peut être effectué à partir d'un serveur Sap via, par exemple, l'ordinateur personnel PC et l'interface 7 de liaison externe ou l'interface 8 de liaison infrarouge, ou directement au moyen d'une liaison téléphonique grâce à l'interface 9 de liaison par DTMF. Le téléchargement peut également être effectué dans le microprocesseur sécurisé 3 ou 29 (si le module terminal en est équipé) à partir d'une carte à micro-circuit introduite dans le lecteur 6.

A l'étape 32, la zone de la mémoire 3d allouée au programme d'application à recevoir est vide et le microprocesseur 3 est en attente du chargement du programme d'application à la suite d'une requête de chargement.

L'étape suivante 33 correspond à une procédure d'authentification par le microprocesseur 3 de l'entité appelée à télécharger le programme d'application (Emetteur). Cette procédure d'authentification peut faire appel, par exemple, à des mécanismes de chiffrement bien connus des spécialistes de la technique, par exemple des mécanismes symétriques à clés secrètes partagées ou des mécanismes asymétriques à clé privée et clé publique.

L'étape 34 est un test visant à déterminer si la procédure d'authentification a réussi : dans la négative, le message "accès refusé" est affiché sur l'écran 4 (étape 42) et le programme retourne à l'étape 32; dans l'affirmative, le processus de chargement du programme d'application commence à l'étape 35.

L'étape 36 correspond au stockage dans la mémoire EEPROM 3d des trames de données transmises par l'entité assurant le téléchargement.

L'étape 37 est un test pour déterminer si le téléchargement est achevé : dans la négative, le programme de téléchargement revient à l'étape 36 et le téléchargement se poursuit ; dans l'affirmative, il est procédé à l'étape 38 à une vérification de l'intégrité des données reçues par le microprocesseur 3. A cet effet, un code d'authentification de message (MAC) peut être associé au programme téléchargé pour permettre de vérifier non seulement son intégrité, mais également son origine. Le MAC peut être produit en utilisant un mécanisme de cryptographie symétrique (DES en mode chaîné CBC). La vérification de l'origine et de l'intégrité peut aussi être réalisée à l'aide d'un mécanisme de cryptographie asymétrique : un condensé du logiciel téléchargé est signé par l'émetteur à l'aide de sa clé privée ; le microprocesseur sécurisé 3 vérifie ensuite la signature à l'aide de la clé publique de l'émetteur.

Il est à noter que dans ce dernier exemple, la clé publique par principe ne nécessite pas de rester confidentielle. Cependant la sécurité apportée par le microprocesseur assure l'intégrité du logiciel, empêchant un fraudeur de modifier le logiciel pour supprimer la vérification de signature ou simplement de substituer à la clé publique initialement prévue une clé publique pour laquelle il connaîtrait la clé privée associée.

Si d'après le test 39, il s'avère que les données reçues sont correctes, un drapeau indiquant que le programme d'application reçu est validé est élaboré à l'étape 40. Dans le cas contraire, le programme de téléchargement revient à l'étape 32 de départ.

Ce processus de chargement du logiciel d'application, donc du logiciel filtre, dans la mémoire reprogrammable sécurisée (3d, 30a, 130a suivant le mode de réalisation), comporte des mécanismes permettant de confirmer l'origine et l'intégrité des données reçues de l'émetteur du logiciel. Ceci permet d'interdire le téléchargement par un fraudeur d'un logiciel filtre qui serait susceptible de mettre en oeuvre des transactions dans le module terminal 1, 101 à l'insu de l'utilisateur.

### B) Authentification du module logiciel interpréteur 1, 20, 71 par le logiciel filtre F, 62 ou, ce qui est équivalent dans le mode d'exécution correspondant, authentification du microcontrôleur standard 2 par le microprocesseur sécurisé, et/ou établissement d'un canal de communication sécurisé entre ces deux logiciels ou ces deux microprocesseurs.

Pour qu'un utilisateur puisse avoir une totale confiance dans le module terminal au moyen duquel il effectue des transactions, il est nécessaire :
- d'authentifier les données transmises du logiciel interpréteur 20, 71 au microprocesseur sécurisé 3, 30 ou 130 exécutant le logiciel filtre ;
- d'assurer que les données transmises par le logiciel filtre pour être affichées par l'intermédiaire du logiciel interpréteur du module terminal 1, 101 possédé par l'utilisateur ne peuvent l'être que par celui-ci.

Lorsque les moyens de pilotage des échanges de données avec l'utilisateur, c'est à dire le logiciel interpréteur 20, 71, sont implantés de manière fixe et non modifiable dans le module terminal 1, 101, comme par exemple dans la mémoire ROM 2c du microcontrôleur standard 2, l'authentification du module logiciel est équivalente à l'authentification du microcontrôleur.

De même, lorsque le logiciel filtre est implanté de manière à ne pas pouvoir être modifié par une personne non autorisée, dans des moyens de traitement sécurisés tels que le microprocesseur sécurisé 3, la carte à circuit intégré ou bien le serveur sécurisé Ssec, une authentification effectuée par ces moyens sécurisés est équivalente à une authentification effectué par le logiciel filtre lui-même.

Dans la description qui suit, nous décrirons les mécanismes d'authentification des moyens logiciels de pilotage des interfaces ou logiciel interpréteur 20, 71 par le logiciel filtre.

Différentes solutions permettent de remplir ces conditions.

Une première solution consiste à chiffrer toutes les données échangées entre le le logiciel interpréteur 20, 71 et le logiciel filtre.

Une deuxième solution consiste à faire procéder à l'authentification du logiciel interpréteur 20, 71 par le le logiciel filtre et/ou à établir un canal de communication sécurisé entre ces deux logiciels.

Ces deux solutions impliquent nécessairement qu'au moins un paramètre secret connu du logiciel filtre F, 62, soit stocké dans le logiciel interpréteur 20, 71.

Selon la deuxième solution, le logiciel filtre F, 62 authentifie le logiciel interpréteur 20, 71, selon un processus conventionnel d'authentification, sur la base d'une information transmise par le logiciel interpréteur 20, 71, et combinée avec le paramètre secret. Au niveau du logiciel interpréteur 20, 71, cette procédure d'authentification est mise en oeuvre par le logiciel 72 (figure 8A) ou le logiciel 76 (figure 8B), suivant la forme de réalisation du module terminal.

Ce mécanisme d'authentification peut également s'appliquer aux messages échangés entre les deux logiciels pour construire des codes d'authentification des messages permettant de garantir l'origine et l'intégrité de chaque message transmis.

Dans le cas du mode d'exécution décrit à la Figure 4A, cette solution requiert cependant que, de préférence, une protection physique de la liaison entre les deux microprocesseurs soit assurée pour interdire à un fraudeur de lire les données échangées, et en particulier le code d'identification personnel (PIN) de la carte que l'utilisateur peut être amené à introduire via le clavier 5 pour la mise en oeuvre des transactions.

### C) Protection d'un paramètre secret par le microcontrôleur standard 2

La description précédente montre la nécessité de stocker au moins un paramètre secret dans le logiciel interpréteur. Le mode d'exécution du terminal à partir d'un PC, dans lequel le logiciel interpréteur est exécuté sur le PC lui-même, offre donc de par la sécurité limitée du PC un degré de sécurité limité bien que suffisant pour empêcher un virus de se substituer au logiciel interpréteur. Un degré de sécurité supérieur est obtenu en implantant le logiciel interpréteur dans la ROM 2c du microcontrôleur standard 2. Pour améliorer la sécurité, le paramètre secret du microcontrôleur 2 pourra être stocké dans la mémoire temporaire, et cela à la fabrication du produit ou, éventuellement, lors de l'insertion du microprocesseur sécurisé 3 s'il est amovible, ou d'une carte à circuit intégré. Cette opération a pour but d'établir une confiance entre les deux microprocesseurs. Toute précaution utile doit être prise lors de cette opération pour s'assurer de l'authenticité du microcontrôleur 2 (opération effectuée en usine, opération protégée par des clés dites de transport elles-mêmes stockées dans la mémoire temporaire du microcontrôleur 2 en usine, et dont la connaissance conditionne l'opération d'initialisation dudit paramètre secret). En outre des mécanismes conventionnels de détection d'intrusion (contacts...) seront mis en place, pour provoquer l'effacement de la mémoire temporaire en cas d'intrusion (coupure alimentation...).

### D) Authentification mutuelle et établissement d'un canal de communication sécurisé entre le microprocesseur de la carte à circuit intégré et le microprocesseur sécurisé du module terminal

Cette authentification mutuelle et l'établissement du canal de communication sécurisée sont réalisés par la mise en oeuvre de mécanismes identiques à ceux utilisés entre le microcontrôleur standard 2 et le microprocesseur sécurisé exécutant le logiciel filtre comme décrit au point B) ci-dessus.

### E) Authentification du module terminal

Il est important de se prémunir vis-à-vis de toute attaque contre l'ensemble clavier 5, afficheur 4, microprocesseur sécurisé 3, visant par exemple à effectuer des contrefaçons de module terminal, à substituer un module terminal par un module terminal contrefait dans le but de récupérer des informations saisies par l'utilisateur (espionnage clavier), d'accéder aux secrets d'une carte à circuit intégré, d'effectuer des fausses signatures.

Pour cela, il pourra être ajouté un mécanisme permettant à l'utilisateur d'authentifier son terminal.

Cet objectif est atteint grâce à un processus de personnalisation automatique.

### Authentification du module terminal seul

La personnalisation peut consister en le calcul d'un mot de passe facile à se rappeler généré et affiché par le terminal en fonction des paramètres secrets contenus par le ou les microprocesseurs du terminal, lorsque l'utilisateur introduit un PIN. Si le terminal comporte par exemple deux microprocesseurs, le mot de passe est stocké dans le microprocesseur sécurisé, chiffré par le PIN et une clé secrète X, puis transmis au microcontrôleur 2 pour déchiffrement avec la clé X stockée également dans le microcontrôleur 2 et le PIN introduit par l'utilisateur. Ce mécanisme vise a se prémunir contre la substitution de l'un des deux microprocesseurs.

Le même principe peut être appliqué à un couple carte/terminal à chaque fois qu'une carte à micro-circuit est utilisée avec le module terminal. La personnalisation peut consister par exemple en le calcul, au moyen du logiciel de traduction, d'un mot de passe basé sur une information secrète contenue dans le microprocesseur sécurisé de la carte et d'une ou plusieurs informations secrètes contenues dans module terminal. Le même principe que celui décrit ci-dessus peut être utilisé pour calculer le mot de passe. Ce mot de passe, généré lors de la première utilisation du module terminal en conjonction avec la carte et connu de l'utilisateur, est affiché sur l'écran 4 lors des utilisations subséquentes du module terminal avec la carte. L'utilisateur peut ainsi le vérifier et avoir ainsi l'assurance que le terminal en sa possession, constitué du module terminal couplé à la carte, est bien authentique.

### F) Authentification de la carte à micro-circuit par le module terminal

Pour accroître encore la sécurité du système de transaction suivant l'invention, un processus conventionnel d'authentification peut être mis en oeuvre afin d'assurer l'authentification par le module terminal 1, 101 de la carte à micro-circuit utilisée. Un tel processus d'authentification permet notamment d'éviter que le numéro d'identification personnel (PIN) de l'utilisateur, que celui-ci introduit dans le module 1, 101 par le clavier 5 pour exécuter une transaction sécurisée, soit capturé par une carte falsifiée qui aurait été substituée par un fraudeur à la carte authentique de l'utilisateur puis que ce fraudeur récupérerait pour lire le PIN sur la carte falsifiée. L'authentification peut, par exemple, être effectuée par un mécanisme classique de type défi / réponse au moyen d'un secret partagé entre la carte et le module terminal en utilisant une cryptographie symétrique ou bien, comme cela a déjà été décrit précédemment, au moyen d'une clé privée stockée par la carte permettant le chiffrement du défi ou challenge à l'aide d'un algorithme asymétrique, le module terminal vérifiant la réponse à l'aide de sa clé publique.

L'architecture du système de transaction ainsi que les mécanismes de sécurisation décrits ci-dessus confèrent une très grande sécurité aux transactions effectuées au moyen du module terminal 1, 101. Ce module terminal permet :
- grâce au clavier 5, à l'écran 4 et à la protection des données échangées avec l'utilisateur, d'étendre la nature des services réellement sécurisés que peut fournir une carte à micro-circuit ;
- d'utiliser la carte dans le contexte d'un environnement non sécurisé (ordinateur personnel PC susceptible d'être affecté par des virus ou programmes pirates), en l'isolant hermétiquement de cet environnement grâce à une architecture logicielle et/ou matérielle qui contrôle strictement l'accès à la carte, c'est à dire qui contrôle les commandes envoyées aux fonctions cryptographiques contenues dans la carte.

Le module terminal peut revêtir différentes formes telles que :
- un lecteur de carte à circuit intégré, connectable à un ordinateur via différentes interfaces (PCMCIA...) ou non (connexion à un serveur via modem uniquement) ;
- un ordinateur (PC) dont les interfaces utilisateur sont constituées par l'écran et le clavier du PC, et qui comporte un lecteur de carte à circuit intégré. Ce PC inclura des moyens logiciels et / ou matériels (tels qu'un second microprocesseur sécurisé, le microcontrôleur standard étant constitué par le PC) pour assurer l'intégrité et la confidentialité du logiciel filtre. Par ordinateur on entend un ordinateur de type PC, mais également un PDA (" Personal Digital Assistant " ou Assistant Numérique Personnel) ;
- un clavier, éventuellement muni d'un écran d'affichage LCD, dans lequel est intégré un microprocesseur sécurisé et une interface carte à circuit intégré ;
- un téléphone muni éventuellement d'un afficheur, dans lequel est intégré un microprocesseur sécurisé et une interface carte à circuit intégré ;
- un décodeur (set-top box) de réseau câblé de TV intégrant un lecteur ce carte à circuit intégré connecté à un poste de télévision, le poste de télévision, un clavier ou éventuellement la télécommande associé au décodeur ou à la télévision servant de moyens d'interface avec l'utilisateur ;
- plus généralement tout équipement sécurisable par l'intégration d'un microprocesseur sécurisé dans lequel pourra être installée une application dite sensible, ou par l'intégration d'une interface carte à circuit intégré permettant le pilotage dudit équipement par une application déportée dans une carte à circuit intégré.

L'ensemble de la description précédente décrit un terminal destiné à être utilisé avec une carte à circuit intégré ou "smart card". La carte à laquelle il est fait référence est en fait un outil permettant la mise en oeuvre de fonctions cryptographiques et personnalisé par rapport à un utilisateur au moyen d'au moins un secret. Il est évident que l'objet de l'invention ne se limite pas à un outil de forme donnée tel que celui de la carte à circuit intégré. L'invention couvre aussi la mise en oeuvre de dispositifs personnels de sécurité pouvant offrir des fonctions équivalentes à celle d'une carte à circuit intégré, mais présentés sous une forme différente, tels que les produits " iButton ", " java Ring " ou jeton (" token").

## Revendications

1. Terminal pour la mise en oeuvre, par un utilisateur, de transactions électroniques sécurisées en liaison avec au moins une application implantée sur une unité électronique, ledit terminal comprenant :
- un module terminal comportant au moins :
* des premiers moyens d'interface avec ladite application pour en recevoir des requêtes relatives auxdites transactions,
* des deuxièmes moyens d'interface avec ledit utilisateur,
* des troisièmes moyens d'interface avec un dispositif personnel de sécurité,
* des premiers moyens (2, 29, 102) de traitement de données comprenant au moins des premiers moyens logiciels (1, 20, 71) de pilotage desdits moyens d'interface, et
- un dispositif personnel de sécurité comportant au moins des deuxièmes moyens (30, 130) de traitement de données sécurisés comprenant au moins des deuxièmes moyens logiciels (80-84) d'exécution de commandes élémentaires et des moyens d'exécution de calculs cryptographiques,
**caractérisé en ce que:**
- ledit terminal (1, 31 ; 101, 131) est adapté pour recevoir lesdites requêtes de ladite application (Fap) implantée sur la dite unité électronique (Sap ; PC) sous la forme de requêtes de haut niveau indépendantes dudit dispositif personnel de sécurité,
- l'un au moins dudit module terminal (1; 101) et dudit dispositif personnel de sécurité comprend :
* au moins une mémoire reprogrammable (3d ; 30a ; 102b ; 130a ; Ssec) de stockage d'au moins un logiciel filtre (F, 62), traduisant lesdites requêtes de haut niveau en au moins l'une de:
(i) au moins une commande élémentaire ou une séquence de commandes élémentaires exécutables par lesdits deuxièmes moyens logiciels (80-84) desdits deuxièmes moyens de traitement de données (30 ; 130), ou
(ii) au moins une séquence d'échange de données entre ledit module terminal (1 ; 101) et ledit utilisateur via lesdits seconds moyens d'interface (4, 5), exécutables par lesdits premiers moyens logiciels (I, 20, 71) desdits premiers moyens de traitement de données (2 ; 29 ; 102),
* des moyens de protection dudit logiciel filtre (F, 62), pour empêcher toute lecture et/ou modification dudit logiciel filtre par une entité non autorisée, et
- l'un au moins desdits premiers et deuxièmes moyens de traitement de données (3 ; 29 , 30 ; 102 ; 130 ; Ssec) comprend un dispositif de traitement de données pour l'exécution dudit logiciel filtre (F, 62).

2. Terminal selon la revendication 1, **caractérisé en ce que** ledit dispositif d'exécution du logiciel filtre comprend des premiers moyens d'identification et /ou d'authentification de ladite application (Fap) implantée dans ladite unité électronique (Sap; PC) ou de l'origine desdites requêtes émises par ladite application.

3. Terminal selon la revendications 2, **caractérisé en ce que** ledit dispositif de traitement de données pour l'exécution dudit logiciel filtre (F, 62) comprend des moyens de vérification de l'intégrité des données reçues de ladite application (Fap).

4. Terminal selon l'une quelconque des revendications 1 à 3, **caractérisé en ce que** ledit dispositif de traitement de données pour l'exécution dudit logiciel filtre (F, 62) comprend des moyens centralisés (Ssec) de contrôle des conditions d'utilisation des services du dispositif personnel de sécurité (31) en fonction de ladite application (Fap) et/ou de l'utilisateur.

5. Terminal selon l'une quelconque des revendications 1 à 4, **caractérisé en ce que** ledit dispositif de traitement de données pour l'exécution dudit logiciel filtre (F, 62) comprend :
- des moyens pour commander le chargement sécurisé dudit logiciel filtre dans ladite mémoire programmable, via l'un desdits premiers ou troisièmes moyens d'interface, à partir d'une entité extérieure audit module, et
- des premiers moyens de contrôle d'accès pour n'autoriser ledit chargement dudit logiciel filtre qu'en réponse à au moins une condition prédéfinie.

6. Terminal selon l'une quelconque des revendications 1 à 5, **caractérisé en ce qu'**il comprend des deuxièmes moyens d'authentification desdits premiers moyens de traitement de données (2 ; 3 ; 29 ; Ssec) par lesdits deuxièmes moyens de traitement de données (30 ; 130).

7. Terminal selon l'une quelconque des revendications 1 à 6, **caractérisé en ce qu'**il comprend des troisièmes moyens d'authentification desdits deuxièmes moyens de traitement de données (30 ; 130) par lesdits premiers moyens de traitement de données (3 ; 29).

8. Terminal selon l'une quelconque des revendications 6 et 7, **caractérisé en ce qu'**il comprend un premier canal de communication (6) entre lesdits premiers (2 ; 3 ; 29) et deuxièmes (30 ; 130) moyens de traitement de données et des premiers moyens de sécurisation dudit premier canal de communication.

9. Terminal selon l'une quelconque des revendications 1 à 8, **caractérisé en ce qu'**il comprend des quatrièmes moyens d'authentification dudit module terminal (1 ; 101) par ledit utilisateur, indépendamment dudit dispositif personnel de sécurité (31 ; 131).

10. Terminal selon la revendication 9, **caractérisé en ce que** lesdits quatrièmes moyens d'authentification comprennent des moyens de calcul, par lesdits premiers moyens de traitement de données (2 ; 3 ; 29), et de présentation audit utilisateur, via lesdits deuxièmes moyens d'interface (4), d'un mot de passe connu dudit utilisateur et calculé sur la base d'au moins un premier paramètre secret stocké dans lesdits premiers moyens de traitement de données (2 ; 3 ; 29).

11. Terminal selon l'une quelconque des revendications 1 à 10, **caractérisé en ce qu'**il comprend des cinquièmes moyens d'authentification conjointe dudit module terminal (1 ; 101) et dudit dispositif personnel de sécurité (31 ; 131) par ledit utilisateur.

12. Terminal selon la revendication 11, **caractérisé en ce que** lesdits cinquièmes moyens d'authentification comprennent des moyens de calcul, par ledit dispositif d'exécution dudit logiciel filtre (3 ; 29 ; 31 ; 131), et de présentation audit utilisateur, via lesdits deuxièmes moyens d'interface (4), d'un mot de passe connu dudit utilisateur et calculé sur la base d'au moins un deuxième et un troisième paramètres secrets stockés en mémoire respectivement dans lesdits premiers (2 ; 3 ; 29) et deuxièmes (30 ; 130) moyens de traitement de données.

13. Terminal selon l'une quelconque des revendications 1 à 12, **caractérisé en ce que** ledit module terminal (1) comporte ladite mémoire programmable (3d) pour le chargement et le stockage dudit logiciel filtre (F, 62).

14. Terminal selon la revendication 13, **caractérisé en ce que** ledit logiciel filtre (F, 62) génère des premières commandes pour la mise en oeuvre de ladite séquence d'échanges de données entre ledit module terminal (1) et ledit utilisateur, et **en ce que** lesdits premiers moyens de traitement de données comprennent un premier microprocesseur (2 ; 102) de pilotage desdits moyens d'interface (4-9) programmé grâce auxdits premiers moyens logiciels (20, 71) de pilotage desdits moyens d'interface pour exécuter lesdites premières commandes générées par ledit logiciel filtre (F, 62), et un deuxième microprocesseur sécurisé (3) du type pour carte à circuit intégré disposé dans ledit module terminal et comportant ladite mémoire programmable (3d), ledit second microprocesseur (3) exécutant ledit logiciel filtre (F, 62) pour le pilotage de ladite séquence d'échanges de données au moyen desdites premières commandes transmises audit premier microprocesseur (2) et pour l'application de ladite commande élémentaire ou séquence de commandes élémentaires auxdits deuxièmes moyens de traitement de données.

15. Terminal selon la revendication 14, **caractérisé en ce que** lesdits premiers moyens logiciels (20, 71) de pilotage des moyens d'interface comportent au moins un quatrième paramètre secret, ledit deuxième microprocesseur (3) étant commandé par ledit logiciel filtre (F, 62) pour authentifier lesdits premiers moyens logiciels (20, 71) de pilotage des moyens d'interface sur la base d'une information transmise par ledit premier microprocesseur (2) et combinée au moins avec ledit quatrième paramètre secret.

16. Terminal selon la revendication 15, **caractérisé en ce qu'**il comprend un deuxième canal de communication (12) entre lesdits premiers moyens logiciels (20, 71) de pilotage des moyens d'interface et ledit deuxième microprocesseur (3) et des deuxièmes moyens de sécurisation dudit deuxième canal de communication.

17. Terminal selon la revendication 16, **caractérisé en ce que** lesdits deuxièmes moyens de sécurisation comprennent des moyens de chiffrement et déchiffrement, par lesdits premiers moyens logiciels (20, 71) et par ledit deuxième microprocesseur (3), des données transmises sur ledit deuxième canal de communication (12), sur la base d'au moins un cinquième paramètre secret mémorisé dans lesdits premiers et deuxièmes moyens de traitement de données.

18. Terminal selon l'une quelconque des revendications 16 et 17, **caractérisé en ce que** lesdits deuxièmes moyens de sécurisation comprennent des premiers moyens physiques de protection dudit deuxième canal de communication (12) contre les intrusions.

19. Terminal selon l'une quelconque des revendications 15 à 18, **caractérisé en ce que** ledit premier microprocesseur (2) comporte une mémoire temporaire (2b) pour le stockage dudit paramètre secret et des deuxièmes moyens physiques de protection de ladite mémoire temporaire (2b) contre les intrusions.

20. Terminal selon l'une quelconque des revendications 14 à 19, **caractérisé en ce que** ledit deuxième microprocesseur (2) est un microcontrôleur.

21. Terminal selon la revendication 13, **caractérisé en ce que** ledit logiciel filtre génère des premières commandes pour la mise en oeuvre de ladite séquence d'échanges de données entre ledit module terminal et ledit utilisateur et lesdits premiers moyens de traitement de données comprennent ledit dispositif d'exécution du logiciel filtre et sont constitués par un microprocesseur sécurisé (29) adapté pour :
* exécuter ledit logiciel filtre (F, 62) de traduction et de conversion desdites requêtes de haut niveau en au moins une séquence d'échanges de données entre le module terminal et l'utilisateur et/ou en au moins une commande élémentaire ou une séquence de commandes élémentaires exécutables par lesdits deuxièmes moyens logiciels desdits deuxièmes moyens de traitement de données (31),
* piloter lesdits moyens d'interface (4-9) grâce auxdites premières commandes générées par ledit logiciel filtre, pour la mise en oeuvre de ladite séquence d'échanges entre ledit module terminal (1) et ledit utilisateur.

22. Terminal selon la revendication 21, **caractérisé en ce que** ledit microprocesseur (29) comporte ladite mémoire programmable.

23. Terminal selon la revendication 21, **caractérisé en ce que** ladite mémoire programmable est externe audit microprocesseur (29).

24. Terminal selon la revendication 23, **caractérisé en ce que** ledit logiciel filtre (F, 62) est stocké sous forme chiffrée dans ladite mémoire programmable et **en ce que** ledit microprocesseur (29) comprend des moyens pour lire, déchiffrer et exécuter ledit logiciel filtre.

25. Terminal selon l'une quelconque des revendications 14 à 24, **caractérisé en ce que** lesdits deuxièmes moyens de traitement de données dudit dispositif personnel de sécurité (31) comprennent un deuxième dispositif de traitement de données (30) pour l'exécution sécurisée d'un logiciel filtre et une mémoire programmable (30a) pour le chargement et le stockage dudit logiciel filtre (62), lesdits premiers moyens logiciels desdits premiers moyens de traitement de données étant adaptés pour recevoir lesdites commandes pour la mise en oeuvre de ladite séquence d'échange de données indifféremment de l'un ou l'autre desdits dispositifs (3 ; 29 ; 31) d'exécution de logiciel filtre implantés dans ledit module et ledit dispositif personnel de sécurité respectivement.

26. Terminal selon l'une quelconque des revendications 13 à 25, **caractérisé en ce que** :
- ledit logiciel filtre (F, 62) comprend au moins un paramètre secret,
- lesdits deuxièmes moyens de traitement (30) de données comprennent des seconds moyens de contrôle d'accès conditionnels pour n'autoriser l'exécution desdits calculs cryptographiques, en réponse à des commandes élémentaires générées par ledit logiciel filtre (F, 62), que si au moins une seconde condition prédéfinie, fonction dudit paramètre secret est remplie.

27. Terminal selon l'une quelconque des revendications 1 à 12, **caractérisé en ce que** ledit dispositif personnel de sécurité (131) comporte ladite mémoire programmable (130a) pour le chargement et le stockage dudit logiciel filtre (F, 62).

28. Terminal selon la revendication 27, **caractérisé en ce que** ledit logiciel filtre (F, 62) génère des premières commandes pour la mise en oeuvre de ladite séquence d'échanges de données entre ledit module terminal (1) et ledit utilisateur et ce que lesdits premiers moyens de traitement de données comprennent un premier microprocesseur (2 ; 102) de pilotage desdits moyens d'interface (4-9), programmé grâce auxdits premiers moyens logiciels (20, 71), pour exécuter lesdites premières commandes, générées par ledit logiciel filtre (F,62), et lesdits deuxièmes moyens de traitement de données comprennent un deuxième microprocesseur sécurisé (130) du type pour carte à circuit intégré disposé dans ledit dispositif personnel de sécurité (131) et comportant ladite mémoire programmable (130a), ledit second microprocesseur (130) exécutant (i) ledit logiciel filtre (F, 62) pour le pilotage de ladite séquence d'échanges de données au moyen desdites premières commandes transmises audit premier microprocesseur (2 ; 102), ainsi que (ii) lesdites commandes élémentaires.

29. Terminal selon les revendications 6 et 28, **caractérisé en ce que** lesdits premiers moyens logiciels (20, 71) de pilotage desdits moyens d'interface comportent au moins un paramètre secret et ledit second microprocesseur (130) dudit dispositif personnel de sécurité (131) est commandé par ledit logiciel filtre (62) pour authentifier ledit premier microprocesseur (2) sur la base d'une information transmise par ledit premier microprocesseur (2) et combinée au moins avec ledit paramètre secret.

30. Terminal selon l'une quelconque des revendications 28 et 29, **caractérisé en ce que** ledit deuxième microprocesseur (130) dudit dispositif personnel de sécurité (131) est adapté pour commander le chargement dudit logiciel filtre (F, 62) dans ladite mémoire programmable (130a) via lesdits premiers moyens d'interface (7-9) et lesdits troisièmes moyens (6) d'interface avec ledit dispositif personnel de sécurité (131).

31. Terminal selon l'une quelconque des revendications 13 à 30, **caractérisé en ce que** ledit module terminal (1 ; 101) est constitué par un lecteur de carte à circuit intégré et ledit dispositif personnel de sécurité est une carte à circuit intégré (31 ; 131).

32. Terminal selon la revendication 13, **caractérisé en ce que** ledit module terminal (1) comprend un ordinateur personnel (102) et **en ce que** ladite mémoire reprogrammable est constituée par le disque dur (102b) dudit ordinateur.

33. Terminal selon la revendication 32 et l'une quelconque des revendications 14 à 17, **caractérisé en ce que** ledit premier microprocesseur est constitué par le microprocesseur (102c) dudit ordinateur personnel (102), ledit ordinateur personnel (102) étant en outre interfacé audit microprocesseur sécurisé (3).

34. Terminal selon la revendication 32, **caractérisé en ce que** ledit logiciel filtre (F) comprend un premier module de chargement/déchiffrement (Fcd) et un deuxième module chiffré (Fchi) pour ladite traduction des requêtes de haut niveau, ledit premier module (Fcd) commandant le chargement dudit deuxième module (Fchi) en mémoire RAM dudit ordinateur (102) et son déchiffrement pour l'exécution dudit logiciel filtre par ledit ordinateur.

35. Terminal selon la revendication 32, **caractérisé en ce que** ledit logiciel filtre (F) comprend au moins un premier module (F-PC) implanté sur ledit ordinateur personnel (102) et au moins un deuxième module (F-SE) implanté sur un serveur de sécurité (Ssec), ledit ordinateur personnel (102) et ledit serveur de sécurité (Ssec) étant connectés par un canal de communication sécurisé (CS) permettant un échange de données protégé entre lesdits modules.

36. Terminal selon l'une quelconque des revendications 32 à 35, **caractérisé en ce que** ledit dispositif personnel de sécurité (31) est une carte à circuit intégré.

37. Système pour la mise en oeuvre de transactions sécurisée, **caractérisé en ce qu'**il comprend au moins un terminal (1, 31 ; 101, 131) selon l'une quelconque des revendications 1 à 36, et au moins une unité électronique (Sap ; PC) comportant des moyens pour transmettre lesdites requêtes de haut niveau audit terminal (1, 31 ; 101, 131).

38. Système selon la revendication 37, **caractérisé en ce qu'**il comprend une pluralité de terminaux (1, 31 ; 101, 131), au moins un serveur (S) constituant ladite unité électronique, et des moyens (CR) de transmission de données numériques entre ledit serveur (S) et lesdits terminaux.

## Claims

1. A terminal for execution of secure electronic transactions by a user in conjunction with at least one application installed on an electronic unit, said terminal comprising:
- a terminal module including at least:
* first interface means with said application for receiving from it requests relating to said transactions,
* second interface means with said user;
* third interface means with a personal security device,
* first data processing means (2; 29; 102) comprising at least first software means (1; 20; 71) for controlling said interface means, and
- a personal security device including at least second secure data processing means (30; 130) comprising at least second software means (80-84) for executing elementary commands and means for executing cryptographic computations,
**characterised in that**:
- said terminal (1, 31; 101, 131) is adapted to receive said requests from said application (Fap) installed on said electronic unit (Sap; PC) in the form of high-level requests independent of said personal security device,
- at least one of said terminal module (1; 101) and said personal security device comprises :
* at least one reprogrammable memory (3d; 30a; 102b; 130a; Ssec)for storing at least one filter program (F, 62) translating said high-level requests into at least one of either:
(i) at least an elementary command or a sequence of elementary commands that can be executed by said second software means (80-84) of said second data processing means (30; 130), or
(ii) at least one sequence of data exchanges between said terminal module (1 ; 101) and said user via said second interface means (4, 5), which can be executed by said first software means (I, 20, 71) of said first data processing means (2; 29; 102), and
* means for protecting said filter program (F, 62) to prevent an unauthorised entity from either reading and/or modifying said filter program, and
- at least one of said first and said second data processing means (3; 29, 30; 102; 130; Ssec) comprise a data processing device for executing said filter program (F, 62).

2. A terminal according to claim 1 **characterised in that** said device for executing the filter program comprises first means for identifying and/or authenticating said application (Fap) installed on said electronic unit (Sap; PC) or the source of said requests sent by said application.

3. A terminal according to claim 2 **characterised in that** said data processing device for executing said filter program (F, 62) comprises means for verifying the integrity of data received from said application (Fap).

4. A terminal according to any one of claims 1 to 3 **characterised in that** said data processing device for executing said filter program (F, 62) comprises centralised means (Ssec) for controlling conditions of use of services of the personal security device (31) in accordance with said application (Fap) and/or the user.

5. A terminal according to any one of claims 1 to 4 **characterised in that** said data processing device for executing said filter program (F, 62) comprises:
- means for commanding loading in a secured manner of said filter program into said programmable memory via said first or said third interface means from an entity external to said module, and
- first access control means for authorising said loading of said filter program only in response to at least one predefined condition.

6. A terminal according to any one of claim 1 to 5 **characterised in that** it comprises second means for authenticating said first data processing means (2; 3; 29; Ssec) by said second data processing means (30; 130).

7. A terminal according to any one of claims 1 to 6 **characterised in that** it comprises third means for authenticating said second data processing means (30; 130) by said first data processing means (3; 29).

8. A terminal according to claim 6 or claim 7 **characterised in that** it comprises a first communication channel (6) between said first data processing means (2; 3; 29) and said second data processing means (30; 130) and first means for securing said first communication channel.

9. A terminal according to any one of claims 1 to 8 **characterised in that** it comprises fourth means for authentication of said terminal module (1; 101) by said user, independently of said personal security device (31; 131).

10. A terminal according to claim 9 **characterised in that** said fourth authentication means comprise means for calculating by said first data processing means (2; 3; 29) and for presentating to said user via said second interface means (4) a password known to said user and calculated on the basis of a first secret parameter stored in said first data processing means (2; 3; 29).

11. A terminal according to any one of claims 1 to 10 **characterised in that** it comprises fifth means for conjoint authentication of said terminal module (1; 101) and said personal security device (31; 131) by said user.

12. A terminal according to claim 11 **characterised in that** said fifth authentication means comprise means for calculating by said device for executing said filter program (3; 29; 31; 131) and for presentating to said user via said second interface means (4) a password known to said user and calculated on the basis of at least second and third secret parameters stored respectively in memory in said first data processing means (2; 3; 29) and in memory in said second data processing means (30; 130).

13. A terminal according to any one of claims 1 to 12 **characterised in that** said terminal module (1) includes said programmable memory (3d) for loading and storing said filter program (F, 62).

14. A terminal according to claim 13 **characterised in that** said filter program (F, 62) generates first commands for implementing said at least one sequence of exchanges of data between said terminal module (1) and said user and said first data processing means comprise a first microprocessor (2; 102) for controlling said interface means (4-9) programmed by virtue of said first software means (20, 71) for controlling said interface means to execute said first commands generated by said filter program (F, 62), and a second secure microprocessor (3) of the integrated circuit card type disposed in said terminal module and including said programmable memory (3d), said second microprocessor (3) executing said filter program (F, 62) to control said at least one sequence of exchanges of data by means of said first commands sent to said first microprocessor (2) and for applying said at least one elementary command or sequence of elementary commands to said second data processing means.

15. A terminal according to claim 14 **characterised in that** said first software means (20, 71) for controlling the interface means include at least a fourth secret parameter, said second microprocessor (3) being controlled by said filter program (F, 62) to authenticate said first software means (20, 71) for controlling the interface means on the basis of information sent by said first microprocessor (2) and combined at least with said fourth secret parameter.

16. A terminal according to claim 15 **characterised in that** it comprises a second communication channel (12) between said first software means (20, 71) for controlling the interface means and said second microprocessor (3) and second means for securing said second communication channel.

17. A terminal according to claim 16 **characterised in that** said second securing means comprise means for encryption and decryption by said first software means (20, 71) and by said second microprocessor (3), of data sent on said second communication channel (12) on the basis of at least a fifth secret parameter stored in memory in said first and second data processing means.

18. A terminal according to claim 16 or claim 17 **characterised in that** said second securing means comprise first physical means for protecting said second communication channel (12) against intrusion.

19. A terminal according to any one of claims 15 to 18 **characterised in that** said first microprocessor (2) includes a temporary memory (2b) for storing said secret parameter and second means for physically protecting said temporary memory (2b) against intrusion.

20. A terminal according to any one of claims 14 to 19 **characterised in that** said second microprocessor (2) is a microcontroller.

21. A terminal according to claim 13 **characterised in that** said filter program generates first commands for implementing said at least one sequence of data exchanges between said terminal module and said user and said first data processing means comprise said device for executing said filter program and consist in a secure microprocessor (29) adapted to:
* execute said filter program (F, 62) for translating and converting said high-level requests into at least one sequence of data exchanges between the terminal module and the user and/or into at least one elementary command or a sequence of elementary commands that can be executed by said second software means of said second data processing means (31),
* control said interface means (4-9) using said first commands generated by said filter program to implement said at least one sequence of exchanges between said terminal module (1) and said user.

22. A terminal according to claim 21 **characterised in that** said microprocessor (29) includes said programmable memory.

23. A terminal according to claim 21 **characterised in that** said programmable memory is external to said microprocessor (29).

24. A terminal according to claim 23 **characterised in that** said filter program (F, 62) is stored in encrypted form in said programmable memory and **in that** said microprocessor (29) comprises means for reading, decrypting and executing said filter program.

25. A terminal according to any one of claims 14 to 24 **characterised in that** said second data processing means of said personal security device (31) comprise a second data processing device (30) for secure execution of a filter program and a programmable memory (30a) for loading and storing said filter program (62), said first software means of said first data processing means being adapted to receive said commands for implementing said at least one sequence of exchange of data from either of said filter program executing devices (3; 29; 31) installed in said module and said personal security device, respectively.

26. A terminal according to any one of claims 13 to 25 **characterised in that**:
- said filter program (F, 62) comprises at least one secret parameter,
- said second data processing means (30) comprise second means of conditional access control for authorising execution of said cryptographic computations in response to elementary commands generated by said filter program (F, 62) only if at least a second predefined condition depending on said secret parameter is satisfied.

27. A terminal according to any one of claims 1 to 12 **characterised in that** said personal security device (131) includes said programmable memory (130a) for loading and storing said filter program (F, 62).

28. A terminal according to claim 27 **characterised in that** said filter program (F, 62) generates first commands for implementing said at least one sequence of exchanges of data between said terminal module (1) and said user and said first data processing means comprise a first microprocessor (2; 102) for controlling said interface means (4-9), programmed by said first software means (20, 71), to execute said first commands generated by said filter program (F, 62), and said second data processing means comprise a secure second microprocessor (130) of the integrated circuit card type disposed in said personal security device (131) and including said programmable memory (130a), said second microprocessor (130) executing (i) said filter program (F, 62) for controlling said at least one sequence of exchanges of data by means of said first commands sent to said first microprocessor (2; 102), and (ii) said elementary commands.

29. A terminal according to claim 6 and claim 28 **characterised in that** said first software means (20, 71) for controlling said interface means include at least one secret parameter and said second microprocessor (130) of said personal security device (131) is controlled by said filter software (62) to authenticate said first microprocessor (2) on the basis of information sent by said first microprocessor (2) and combined at least with said secret parameter.

30. A terminal according to claim 28 or claim 29 **characterised in that** said second microprocessor (130) of said personal security device (131) is adapted to command the loading of said filter program (F, 62) into said programmable memory (130a) via said first interface means (7-9) and said third interface means (6) with said personal security device (131).

31. A terminal according to any one of claims 13 to 30 **characterised in that** said terminal module (1; 101) is an integrated circuit card reader and said personal security device is an integrated circuit card (31; 131).

32. A terminal according to claim 13 **characterised in that** said terminal module (1) comprises a personal computer (102) and **in that** said reprogrammable memory is included in the hard disk (102b) of said computer.

33. A terminal according to claim 32 and any one of claims 14 to 17
**characterised in that** said first microprocessor is the microprocessor (102c) of said personal computer (102), said personal computer (102) being also interfaced to said secure microprocessor (3).

34. A terminal according to claim 32 **characterised in that** said filter program (F) comprises a loading/decryption first module (Fcd) and an encrypted second module (Fchi) for said translation of high-level requests, said first module (Fcd) commanding the loading of said second module (Fchi) into RAM of said computer (102) and its decryption for execution of said filter program by said computer.

35. A terminal according to claim 32 **characterised in that** said filter program (F) comprises at least one first module (F-PC) installed on said personal computer (102) and at least one second module (F-SE) installed on a security server (Ssec), said personal computer (102) and said security server (Ssec) being connected by a secure communication channel (CS) enabling protected exchange of data between said modules.

36. A terminal according to any one of claims 32 to 35 **characterised in that** said personal security device (31) is an integrated circuit card.

37. A system for performing secure transactions **characterised in that** it comprises at least one terminal (1, 31; 101, 131) according to any one of claims 1 to 36 and at least one electronic unit (Sap; PC) including means for transmitting said high-level requests to said terminal(1, 31; 101, 131).

38. A system according to claim 37 **characterised in that** it comprises a plurality of terminals (1, 31; 101, 131), at least one server (S) constituting said electronic unit and means (CR) for sending digital data between said server (S) and said terminals.

## Patentansprüche

1. Terminal zur Durchführung von gesicherten elektronischen Transaktionen von einem Benutzer in Verbindung mit mindestens einer auf einer elektronischen Einheit implantierten Anwendung, wobei das besagte Terminal folgendes aufweist:
- einen mindestens folgendes aufweisenden Terminalmodul:
• erste Schnittstellenmittel mit der besagten Anwendung, um auf die besagten Transaktionen bezogene Anfragen zu empfangen,
• zweite Schnittstellenmittel mit dem besagten Benutzer,
• dritte Schnittstellenmittel mit einer persönlichen Sicherheitsvorrichtung,
• erste Datenverarbeitungsmittel (2, 29, 102), welche mindestens erste Programmsteuerungsmittel (1, 20, 71) für besagte Schnittstellenmittel aufweist, und
- eine persönliche Sicherheitsvorrichtung , welche mindestens zweite (30, 130) gesicherte Datenverarbeitungsmittel aufweist, welche mindestens zweite (80, 84) Programmdurchführungsmittel für elementare Befehle und Durchführungsmittel für Verschlüsselungsberechnungen aufweist,
**dadurch gekennzeichnet, dass** :
- das besagte Terminal (1, 31; 101, 131) geeignet ist, besagte Anfragen nach besagter Anwendung (Fap) zu empfangen, welche auf besagter elektronischer Einheit (Sap, PC) implantiert ist, und zwar in der Form von Anfragen mit einem hohen Niveau , unabhängig von besagter persönlicher Sicherheitsvorrichtung,
- mindestens einer der besagten Terminalmodule (1; 101) und der besagten persönlichen Sicherheitsvorrichtung folgendes aufweist:
• mindestens einen wiederprogrammierbaren Speicher (3d; 30a; 102b; 130a; Ssec) zur Speicherung mindestens eines Filterprogramms (F, 62), welches die besagten Anfragen mit einem hohen Niveau in mindestens folgendes umwandelt:
(i) mindestens einen Elementarbefehl oder eine Folge von Elementarbefehlen, welche von den besagten zweiten Programmitteln (80-84) der besagten zweiten Datenverarbeitungsmittel (30, 130) durchführbar ist, oder
(ii) mindestens eine Datenaustauschfolge zwischen dem besagten Terminalmodul (1; 101) und dem besagten Benutzer über die besagten Schnittstellenmittel (4, 5), welche durch besagte erste Programmittel (1, 20, 71) der besagten ersten Datenverarbeitungsmittel (2; 29; 102) ausführbar sind,
• Schutzmittel für das besagte Filterprogramm (F, 62) , um jedes Lesen und/oder jede Veränderung des besagten Filterprogramms durch eine nicht autorisierte Einheit zu verhindern, und
- mindestens eines der besagten ersten und zweiten Datenverarbeitungsmittel (3; 29; 30; 102; 130; Ssec) eine Datenverarbeitungsvorrichtung zur Durchführung des besagten Filterprogramms (F, 62) aufweist.

2. Terminal nach Anspruch 1, **dadurch gekennzeichnet, dass** die besagte Vorrichtung zur Durchführung des Filterprogramms erste Identifizierungs- und/oder Authentifizierungsmittel für besagte, in der besagten elektronischen Einheit (Sap; PC) implantierte Anwendung (Fap) oder für den Ursprung der von der besagten Anwendung abgesandten Anfragen aufweist.

3. Terminal nach Anspruch 2, **dadurch gekennzeichnet, dass** besagte Datenverarbeitungsvorrichtung zur Durchführung des besagten Filterprogramms (F, 62) Mittel zur Prüfung der Integrität der von der besagten Anwendung (Fap) erhaltenen Daten aufweist.

4. Terminal nach einem der Ansprüche 1 bis 3, **dadurch gekennzeichnet, dass** besagte Datenverarbeitungsvorrichtung zur Durchführung des besagten Filterprogramms (F, 62) zentralisierte Kontrollmittel (Ssec) der Benutzungsbedingungen zum Betrieb der persönlichen Sicherheitsvorrichtung (31) in Abhängigkeit von der besagten Anwendung (Fap) und/oder des Benutzers aufweist.

5. Terminal nach einem der Ansprüche 1 bis 4, **dadurch gekennzeichnet, dass** besagte Datenverarbeitungsvorrichtung zur Durchführung des besagten Filterprogramms (F, 62) folgendes aufweist:
- Mittel zur Steuerung des gesicherten Ladens des besagten Filterprogramms in den besagten programmierbaren Speicher, über eine der besagten ersten oder dritten Schnittstellenmittel, von einer externen Einheit zum besagten Modul, und
- erste Zugangskontrollmittel zum ausschliesslichen autorisierten Laden des besagten Filterprogramms als Antwort auf mindestens eine vorbestimmte Bedingung.

6. Terminal nach einem der Ansprüche 1 bis 5, **dadurch gekennzeichnet, dass** es zweite Authentifizierungsmittel der besagten ersten Datenverarbeitungsmittel (2; 3; 29; Ssec) durch die besagten zweiten Datenverarbeitungsmittel (30; 130) aufweist.

7. Terminal nach einem der Ansprüche 1 bis 6, **dadurch gekennzeichnet, dass** es dritte Authentifizierungsmittel der besagten zweiten Datenverarbeitungsmittel (30; 130) durch die besagten ersten Datenverarbeitungsmittel (3; 29) aufweist.

8. Terminal nach einem der Ansprüche 6 und 7, **dadurch gekennzeichnet, dass** es einen ersten Kommunikationskanal (6) zwischen den besagten ersten (2; 3; 29) und zweiten (30; 130) Datenverarbeitungsmitteln und erste Sicherungsmittel des besagten ersten Kommunikationskanals aufweist.

9. Terminal nach einem der Ansprüche 1 bis 8, **dadurch gekennzeichnet, dass** es vierte Authentifizierungsmittel des besagten Terminalmoduls (1; 101) durch besagten Benutzer unabhängig von besagter persönlicher Sicherheitsvorrichtung (31; 131) aufweist.

10. Terminal nach Anspruch 9, **dadurch gekennzeichnet, dass** die besagten vierten Authentifizierungsmittel Berechnungsmittel durch die besagten ersten Datenverarbeitungsmittel (2; 3; 29) und Darstellungsmittel über die besagten zweiten Schnittstellenmittel (4) eines Passwortes aufweisen, welches Passwort dem besagten Benutzer bekannt und auf der Grundlage mindestens eines ersten geheimen in den besagten ersten Datenverarbeitungsmitteln (2; 3; 29) gespeicherten Parameter berechnet ist.

11. Terminal nach irgendeinem der Ansprüche 1 bis 10, **dadurch gekennzeichnet, dass** es fünfte Mittel zur vereinigten Authentifizierung vom besagten Benutzer des besagten Terminalmoduls (1; 101) und der besagten Sicherheitsvorrichtung (31; 131) aufweist.

12. Terminal nach Anspruch 11, **dadurch gekennzeichnet, dass** die fünften Authentifizierungsmittel Berechnungsmittel durch die besagte Ausführungsvorrichtung für das besagte Filterprogramm (3; 29; 31; 131) und Darstellungsmittel über die besagten zweiten Schnittstellenmittel (4) eines dem besagten Benutzer bekannten Passwortes aufweisen, welches Passwort auf der Grundlage mindestens eines zweiten und dritten geheimen in den besagten ersten (2; 3; 29) und zweiten (30; 130) Datenverarbeitungsmitteln gespeicherten Parameters berechnet ist.

13. Terminal nach irgendeinem der Ansprüche 1 bis 12, **dadurch gekennzeichnet, dass** das besagte Terminalmodul (1) den besagten programmierbaren Speicher (3d) für das Laden und Speichern des besagten Filterprogrammes (F, 62) aufweist.

14. Terminal nach Anspruch 13, **dadurch gekennzeichnet, dass** das besagte Filterprogramm (F; 62) erste Befehle erzeugt für die Durchführung der besagten Datenaustauschfolge zwischen dem besagten Terminalmodul (1) und dem besagten Benutzer und dadurch, dass die besagten ersten Datenverarbeitungsmittel einen ersten Mikroprozessor (2; 102) zur Steuerung der besagten Schnittstellenmittel (4-9) aufweisen, welcher dank der ersten Steuerungsprogrammittel (20; 71) der besagten Schnittstellenmittel zur Durchführung der vom besagten Filterprogramm (F, 62) erzeugten ersten Befehle programmiert worden ist, und einen zweiten gesicherten Mikroprozessor (3) für eine Karte mit einer integrierten Schaltung aufweist, welche im besagten Terminalmodul angeordnet ist und besagten programmierbaren Speicher (3d) aufweist, wobei der besagte zweite Mikroprozessor (3) das besagte Filterprogramm (F, 62) zur Steuerung der besagten Datenaustauschfolge mit Hilfe der besagten ersten, zu besagtem ersten Mikroprozessor (2) übertragenen Befehle und zur Anwendung des besagten ersten Elementarbefehls oder besagter Elementarbefehlsfolge auf die besagten zweiten Datenverarbeitungsmittel ausführt.

15. Terminal nach Anspruch 14, **dadurch gekennzeichnet, dass** die besagten ersten Programmittel (20, 71) zur Steuerung der Schnittstellenmittel mindestens einen vierten Geheimparameter aufweisen, wobei der besagte zweite Mikroprozessor (3) vom besagten Filterprogramm (F, 62) zur Authentifizierung der besagten ersten Programmittel (20, 71) zur Steuerung der Schnittstellenmittel auf der Grundlage einer vom besagten ersten Mikroprozessor (2) übertragenen und mindestens mit dem besagten vierten Geheimparameter kombinierten Information gesteuert wird.

16. Terminal nach Anspruch 15, **dadurch gekennzeichnet, dass** es einen zweiten Kommunikationskanal (12) zwischen den besagten ersten Programmitteln (20, 71) zur Steuerung von Schnittstellenmitteln und dem besagten zweiten Mikroprozessor (3) und zweite Sicherungsmittel des besagten zweiten Kommunikationskanals aufweist.

17. Terminal nach Anspruch 16, **dadurch gekennzeichnet, dass** die besagten zweiten Sicherungsmittel Mittel zur Ver- und Entschlüsselung durch die besagten ersten Programmittel (20, 71) und durch besagten zweiten Mikroprozessor (3) aufweisen, wobei auf dem zweiten Kommunikationskanal (12) übertragene Daten auf der Grundlage mindestens eines fünften Geheimparameters, der in den ersten und zweiten Datenverarbeitungsmitteln gespeichert ist, ver- und entschlüsselt werden.

18. Terminal nach irgendeinem der Ansprüche 16 und 17, **dadurch gekennzeichnet, dass** die besagten zweiten Sicherungsmittel erste physische Schutzmittel des besagten zweiten Kommunikationskanals (12) gegen Intrusionen aufweisen.

19. Terminal nach irgendeinem der Ansprüche 15 bis 18, **dadurch gekennzeichnet, dass** der besagte erste Mikroprozessor (2) einen Temporärspeicher (2b) für die Speicherung des besagten Geheimparameters und zweite physische Schutzmittel des besagten Temporärspeichers (2b) gegen Intrusionen aufweist.

20. Terminal nach irgendeinem der Ansprüche 14 bis 19, **dadurch gekennzeichnet, dass** der Mikroprozessor (2) ein Mikrokontroller ist.

21. Terminal nach Anspruch 13, **dadurch gekennzeichnet, dass** das besagte Filterprogramm erste Befehle zur Durchführung der besagten Datenaustauschfolge zwischen dem besagten Terminalmodul und dem besagten Benutzer erzeugt, und dass die besagten ersten Datenverarbeitungsmittel die besagte Vorrichtung zur Durchführung des Filterprogramms aufweisen und aus einem gesicherten Mikroprozessor (29) bestehen, welcher zu folgendem geeignet ist:
• Durchführung des besagten Filterprogramms (F, 62) zur Übersetzung und Umwandlung der besagten Anfragen mit hohem Niveau in mindestens eine Datenaustauschfolge zwischen dem Terminalmodul und dem Benutzer und/oder in mindestens einen Elementarbefehl oder eine Elementarbefehlsfolge, welche von den besagten zweiten Programmitteln der besagten zweiten Datenverarbeitungsmittel (31) ausführbar sind,
• Steuerung der besagten Schnittstellenmittel (4-9) dank besagter vom besagten Filterprogamm erzeugter erster Befehle zur Durchführung der besagten Austauschfolge zwischen dem besagten Terminalmodul (1) und dem Benutzer.

22. Terminal nach Anspruch 21, **dadurch gekennzeichnet, dass** der besagte Mikroprozessor (29) den besagten programmierbaren Speicher aufweist.

23. Terminal nach Anspruch 21, **dadurch gekennzeichnet, dass** der besagte programmierbare Speicher ausserhalb des besagten Mikroprozessors (29) liegt.

24. Terminal nach Anspruch 23, **dadurch gekennzeichnet, dass** das besagte Filterprogramm (F, 62) in verschlüsselter Form im programmierbaren Speicher gespeichert ist und dadurch, dass der besagte Mikroprozessor (29) Mittel zum Lesen, Entschlüsseln und Ausführen des besagten Filterprogramms aufweist.

25. Terminal nach irgendeinem der Ansprüche 14 bis 24, **dadurch gekennzeichnet, dass** die besagten zweiten Datenverarbeitungsmittel der persönlichen Sicherheitsvorrichtung (31) eine zweite Datenverarbeitungsvorrichtung (30) zur gesicherten Durchführung eines Filterprogramms und einen programmierbaren Speicher (30a) für das Laden und die Speicherung des besagten Filterprogramms (62) aufweisen, wobei die besagten ersten Programmittel der besagten ersten Datenverarbeitungsmittel geeignet sind, die besagten Befehle zur Durchführung der besagten Datenaustauschfolge von irgendeiner der im besagten Modul bzw. besagten persönlichen Sicherheitsvorrichtung besagten implantierten Vorrichtungen (3; 29; 31) zur Durchführung des Filterprogramms zu empfangen.

26. Terminal nach irgendeinem der Ansprüche 13 bis 25, **dadurch gekennzeichnet, dass**:
- das besagte Filterprogramm (F, 62) mindestens einen Geheimparameter aufweist,
- die besagten zweiten Datenverarbeitungsmittel (30) zweite, Bedingungen unterworfene Zugangskontrollmittel aufweisen, um nur die, die Durchführung der besagten Verschlüsselungsberechnungen als Antwort auf vom besagten Filterprogramm (F, 62) erzeugte Elementarbefehle zuzulassen, wenn mindestens eine zweite vorgegebene, vom besagten Geheimparameter abhängige Bedingung erfüllt ist.

27. Terminal nach einem der Ansprüche 1 bis 12, **dadurch gekennzeichnet, dass** die besagte Sicherheitsvorrichtung (131) den besagten programmierbaren Speicher (130a) zum Laden und zur Speicherung des besagten Filterprogramms (F, 62) aufweist.

28. Terminal nach Anspruch 27, **dadurch gekennzeichnet, dass** das besagte Filterprogramm (F; 62) erste Befehle für die Durchführung der besagten Datenaustauschfolge zwischen dem besagten Terminalmodul (1) und dem besagten Benutzer erzeugt, und dadurch dass die besagten ersten Datenverarbeitungsmittel einen ersten Mikroprozessor (2; 102) zur Steuerung der besagten Schnittstellenmittel (4-9) aufweisen, welcher dank der ersten Steuerungsprogrammittel (20; 71) zur Durchführung der vom besagten Filterprogramm (F, 62) erzeugten ersten Befehle programmiert worden ist, und dass die besagten zweiten Datenverarbeitungsmittel einen zweiten gesicherten Mikroprozessor (130) für eine Karte mit einer integrierten Schaltung aufweisen, welche in besagter persönlicher Sicherheitsvorrichtung (131) angeordnet ist und besagten programmierbaren Speicher (130a) aufweist, wobei der besagte zweite Mikroprozessor (130) (i) das besagte Filterprogramm (F, 62) ausführt zur Steuerung der besagten Datenaustauschfolge mit Hilfe der besagten ersten zu besagten ersten Mikroprozessor (2, 102) übertragenen Befehle, sowie (ii) die besagten Elementarbefehle ausführt.

29. Terminal nach den Ansprüchen 6 und 28, **dadurch gekennzeichnet, dass** die besagten ersten Programmmittel (20, 71) zur Steuerung der besagten Schnittstellenmittel mindestens einen Geheimparameter aufweisen, und dass der besagte zweite Mikroprozessor (130) der besagten persönlichen Sicherheitsvorrichtung (131) vom besagten Filterprogramm (62) gesteuert wird , um den besagten ersten Mikroprozessor (2) auf der Grundlage einer Information, welche vom besagten ersten Mikroprozessor (2) übertragen worden ist und mindestens mit dem besagten Geheimparameter kombiniert ist, zu authentifizieren.

30. Terminal nach irgendeinem der Ansprüche 28 und 29, **dadurch gekennzeichnet, dass** der besagte zweite Mikroprozessor (130), der besagten persönlichen Sicherheitsvorrichtung (131) geeignet ist, das Laden des besagten Filterprogramms (F, 62) in den besagten programmierbaren Speicher (130a) über die besagten ersten Schnittstellenmittel (7-9) und die besagten dritten Schnittstellenmittel (6) mit der besagten persönlichen Sicherheitsvorrichtung (131) zu steuern.

31. Terminal nach irgendeinem der Ansprüche 13 bis 30, **dadurch gekennzeichnet, dass** der besagte Terminalmodul (1; 101) aus einem Kartenleser mit integrierter Schaltung besteht und die besagte persönliche Sicherheitsvorrichtung eine Karte mit intergrierter Schaltung (31; 131) ist.

32. Terminal nach Anspruch 13, **dadurch gekennzeichnet, dass** der besagte Terminalmodul (1) einen Personalcomputer aufweist (102) und dass der wiederprogrammierbare Speicher aus einer Hartplatte (102b) des besagten Computers besteht.

33. Terminal nach Anspruch 32 und irgendeinem der Ansprüche 14 - 17, **dadurch gekennzeichnet, dass** der besagte erste Mikroprozessor aus dem Mikroprozessor (102c) des Personalcomputers (102) besteht, wobei der besagte Personalcomputer unter anderem schnittstellenmässig mit dem besagten gesicherten Mikroprozessor (3) verbunden ist.

34. Terminal nach Anspruch 32, **dadurch gekennzeichnet, dass** das besagte Filterprogramm (F) einen ersten Modul zum Laden und Entschlüsseln (Fcd) und einen zweiten verschlüsselten Modul (Fchi) zur Übersetzung der Anfragen mit hohem Niveau aufweist, wobei der besagte erste Modul (Fcd) das Laden des besagten zweiten Moduls (Fchi) in den RAM-Speicher des besagten Computers (102) und seine Entschlüsselung zur Durchführung des besagten Filterprogramms durch den Computer steuert.

35. Terminal nach Anspruch 32, **dadurch gekennzeichnet, dass** das besagte Filterprogramm (F) mindestens ein erstes im besagten Personalcomputer (102) implantiertes Modul (F-PC) und mindestens ein in einem Sicherheitsserver (Ssec) implantiertes zweites Modul aufweist, wobei der besagte Personalcomputer (102) und der besagte Sicherheitsserver (Ssec) durch einen einen geschützten Datenaustausch zwischen den Modulen ermöglichenden gesicherten Kommunikationskanal (CS)verbunden sind.

36. Terminal nach irgendeinem der Ansprüche 32 bis 35, **dadurch gekennzeichnet, dass** die besagte persönliche Sicherheitsvorrichtung (31) eine Karte mit integrierter Schaltung ist.

37. System zur Durchführung gesicherter Transaktionen, **dadurch gekennzeichnet, dass** es mindestens ein Terminal (1, 31; 101, 131) nach irgendeinem der Ansprüche 1 bis 36 und mindestens eine, Mittel zum Übertragen der besagten Anfragen hohen Niveaus zum besagten Terminal (1, 31; 101, 131) enthaltene elektronische Einheit (Sap; PC) aufweist.

38. System nach Anspruch 37, **dadurch gekennzeichnet, dass** es eine Vielzahl von Terminals (1, 31; 101, 131), mindestens einen, die besagte elektronische Einheit aufbauenden Server (S) und Übertragungsmittel numerischer Daten (CR) zwischen dem besagten Server (S) und den besagten Terminals aufweist.
